# FASCICULE DE BREVET EUROPEEN

(11) **EP 3 116 622 B1**
(45) Date de publication et mention de la délivrance du brevet: **11.04.2018**
(21) Numéro de dépôt: 15709682.7
(22) Date de dépôt: 12.03.2015
(51) Int. Cl.: B01D 33/42, B01D 35/153, B01D 33/01

(54) **DISPOSITIF DE FILTRAGE**
FILTERVORRICHTUNG
FILTERING DEVICE

(30) Priorité: 12.03.2014 FR 1452056
(43) Date de publication de la demande: 18.01.2017
(73) Titulaire: Commissariat à l'Énergie Atomique et aux Énergies Alternatives, 75015 Paris (FR)
(72) Inventeur: PIERRE, Jocelyn, F-04220 Sainte-Tulle (FR)
(74) Mandataire: Hautier, Nicolas
(86) Numéro de dépôt international: PCT/EP2015/055249
(87) Numéro de publication internationale: WO 2015/136062

(56) Documents cités:
- EP-A1- 0 920 894
- US-A1- 2014 008 311

## Description

### DOMAINE TECHNIQUE DE L'INVENTION

La présente invention concerne en général la filtration des fluides. Elle reçoit pour application avantageuse la filtration des fluides qu'il est délicat d'extraire de leur environnement pour des raisons de contamination, de dangerosité ou simplement d'accessibilité.

L'invention s'avère particulièrement avantageuse pour la filtration des fluides utilisés dans des réacteurs nucléaires de recherche ou d'irradiation.

Dans ce type d'application, l'invention permet de récupérer aisément des précipités de métal fluide, par exemple alcalins, issus d'une pollution à l'hydrogène et l'oxygène, en particulier pour des dispositifs irradiés.

### ÉTAT DE LA TECHNIQUE

Un certain nombre d'expériences en réacteur nucléaire d'irradiation (tels que le réacteur OSIRIS par exemple) sont réalisées sur des échantillons dans un bain de métal fluide, de sodium ou un mélange sodium/potassium (couramment dénommé NaK). L'avantage de ces conditions expérimentales est de pouvoir atteindre les niveaux de température désirés par l'expérience (usuellement entre 280°C et 400°C), avec une bonne homogénéité des températures que procure un fluide et sans les contraintes de l'eau qui supposerait une enceinte pressurisée. Ainsi, nombre d'irradiations d'échantillons de matériaux du nucléaire (au premier rang desquels figurent les alliages de zirconium) baignent dans le NaK pendant des durées en réacteur qui peuvent aller jusqu'à quelques années.

Cependant, comme tout composé alcalin, le NaK est très avide d'oxygène et d'hydrogène, sous quelque forme que ce soit. Il importe donc de manipuler constamment ce fluide sous gaz neutre. Malgré toutes les précautions mises en oeuvre, le retrait et l'introduction des échantillons en particulier introduisent des impuretés (par exemple l'eau sous forme d'humidité de l'air) qui réagissent dans le métal fluide formant des composés hydroxydes et hydrures. Ces précipités, très peu solubles à froid, se dissolvent considérablement aux conditions de températures du réacteur d'irradiation. Ainsi, de l'hydrogène gazeux présent en quantité significative dans le NaK peut alors diffuser dans les échantillons après leur adsorption. Les composés zirconium ayant une affinité pour l'hydrogène supérieure à celle des alcalins, l'hydrogène pénètre facilement et en profondeur dans les échantillons expérimentaux, jusqu'à des concentrations telles que les propriétés mécaniques de ces échantillons sont largement modifiées, ce qui peut entrainer leur fragilisation.

Ces modifications faussent ainsi les expérimentations et peuvent même rendre leurs résultats inexploitables.

La solution actuellement mise en oeuvre pour éviter ces problématiques consiste à oxyder très légèrement les échantillons afin d'obtenir par ce traitement de surface une couche qui empêche l'adsorption de l'hydrogène. Cette solution n'est valable que pour des échantillons neufs et en admettant que l'épaisseur d'oxyde ne crée aucune modification des propriétés mécaniques de l'échantillon. Le champ d'application de cette solution est par conséquent limité. Pour un échantillon déjà irradié ou bien dans le cas d'une interdiction expresse du propriétaire de l'échantillon, il n'est pas possible de pré-oxyder ces échantillons. Il faut donc enlever la source de pollution.

On pourrait ainsi être tenté de rechercher des solutions pour purifier ce type de fluide.

Dans le domaine général de la filtration des fluides classiques, c'est-à-dire non dangereux, plusieurs solutions ont été proposées.

Une solution est décrite dans le document US2014/0008311 pour filtrer de l'eau du robinet.

D'autres solutions prévoient d'équiper le circuit de circulation du fluide avec une boucle dédiée à la fonction de filtration.

Cette boucle comporte généralement un filtre, une pompe, des pièges chaud et/ou froid avec corrélativement une maîtrise des températures. En effet, les solubilités des polluants qui ont précipité sont souvent fonction des températures. L'utilisation de ces circuits nécessite alors d'augmenter la température pour solubiliser les composés chimiques précipités puis d'abaisser brutalement en aval du circuit la température en dessous de la limite désirée de solubilité, tout en restant au-dessus de la température de solidification du fluide. Le filtre placé immédiatement après cet étage de refroidissement piège ainsi les précipités. Le niveau de température de refroidissement pilote la concentration résiduelle de polluant selon sa limite de précipitation donnée.

Ces solutions sont relativement efficaces pour des fluides ne présentant pas de dangerosité particulière. En revanche, pour des fluides dangereux, typiquement les fluides présentant un danger de type radiologique et/ou chimique), l'installation pour mettre en mouvement le fluide à travers la boucle de filtrage s'avère très complexe à mettre en oeuvre. Les impacts techniques et financiers de ces solutions sont bien souvent rédhibitoires.

Enfin, il existe un autre type de solution, par exemple pour les très grands volumes et même sans que les fluides présentent une dangerosité particulière, qui ne reposent pas sur un circuit dédié à la filtration mais qui repose sur une filtration passive, consistant à récupérer par gravité les précipités et autres résidus. Ce type de solution présente néanmoins l'inconvénient de ne pas permettre un filtrage satisfaisant en termes de rapidité de filtrage et de ne pas être adaptée aux fluides qui ne sont pas immobiles, par exemple qui peuvent subir un brassage prévu ou imprévu.

Il existe donc un besoin consistant à proposer une solution pour filtrer efficacement un fluide, par exemple un fluide dangereux, tout en réduisant les contraintes techniques ou financières que présentent les solutions connues.

Tel est l'objet de la présente invention.

### RESUME DE L'INVENTION

Pour atteindre cet objectif, un aspect de la présente invention concerne un dispositif de filtrage configuré pour être disposé au sein d'un fluide à filtrer, par exemple à l'intérieur du contenant du fluide et comportant au moins un filtre et un porte-filtre supportant le filtre. Le dispositif de filtrage est configuré pour être déplacé au sein du fluide, par exemple à l'intérieur du contenant du fluide, de manière à ce que lorsque le dispositif de filtrage est déplacé dans un premier sens de déplacement, au moins une partie du fluide traverse le filtre selon un premier sens de filtrage.

Ainsi le filtrage est assuré par un déplacement du dispositif de filtrage par rapport au fluide et au contenant de ce fluide, tel qu'une conduite, une cuve ou un réservoir. Le dispositif de filtrage forme ainsi un piston dans le contenant.

Le fluide peut ainsi être laissé immobile ou être entrainé en mouvement dans le contenant. L'invention permet ainsi d'éviter de nombreux inconvénients induits par les solutions connues et évoqués ci-dessus. En particulier, l'invention permet de se passer d'un circuit dédié à la filtration avec une pompe de mise en circulation et des équipements de gestion de la température pour contrôler la formation des précipités à filtrer.

L'invention propose ainsi une solution simple, fiable et économique pour filtrer un fluide possiblement statique, et ce, au sein même de l'équipement dans lequel il est utilisé.

Elle s'avère notamment particulièrement avantageuse pour filtrer des fluides qu'il est très délicat de transférer dans un circuit exclusivement dédié au nettoyage par exemple pour des raisons de contamination, de dangerosité ou d'exploitation. Tel est notamment le cas des circuits équipant les réacteurs nucléaires de recherche ou d'irradiation tels que le réacteur OSIRIS. Appliquée à ces réacteurs, l'invention permet d'éviter la transmission de la pollution aux échantillons plongés dans le fluide, pollution qui pourrait s'avérer néfaste pour l'expérimentation.

L'invention n'est néanmoins pas limitée à l'application au domaine nucléaire et s'étend à tout type de fluide, notamment tout fluide susceptible d'être chargé en particules solides dans ses conditions d'utilisation.

Selon un mode de réalisation avantageux, le dispositif de filtrage est configuré de manière à empêcher le fluide de traverser le filtre selon un deuxième sens de filtrage opposé au premier sens de filtrage lorsque le dispositif de filtrage est déplacé dans un deuxième de déplacement opposé au premier sens de déplacement.

L'invention permet ainsi d'assurer un filtrage particulièrement efficace. En effet, lorsque le dispositif de filtrage est déplacé dans un premier sens, le fluide est filtré à travers le filtre et accumule dans ce dernier des résidus. Lorsque le dispositif de filtrage est déplacé en sens inverse, le fluide ne peut pas traverser le filtre en sens inverse interdisant ainsi le relargage d'une partie des résidus qui y auront été accumulés et leur dispersion dans le fluide.

Selon d'autres modes de réalisation décrits en détail par la suite en référence aux figures, l'invention porte sur un dispositif de filtrage configuré pour être plongé au moins en partie dans un fluide à filtrer et comportant au moins un filtre principal et un porte-filtre supportant le filtre principal. Le dispositif de filtrage est configuré pour être déplacé à l'intérieur du fluide.

Avantageusement, le porte filtre comporte un corps et au moins un premier et un deuxième blocs clapet, le corps et les deux blocs clapet définissant une chambre de filtrage à l'intérieur de laquelle est disposé le filtre principal.
Avantageusement, le filtre principal présente une paroi externe tournée au regard du corps et une paroi interne opposée à la paroi externe; le filtre principal délimitant dans la chambre de filtrage, une portion interne et une portion externe de la chambre de filtrage situées de part et d'autre des parois interne et externe du filtre principal.
Avantageusement, le porte filtre comporte au moins une ouverture d'entrée définie par le premier bloc clapet et au moins un premier clapet d'admission coopérant avec l'ouverture d'entrée et configuré pour laisser passer le fluide à travers l'ouverture d'entrée uniquement lorsque le dispositif de filtrage est déplacé dans un premier sens de déplacement.
Avantageusement, le porte filtre comporte au moins une ouverture de sortie définie par le deuxième bloc clapet et au moins un premier clapet d'échappement coopérant avec l'ouverture de sortie et configuré pour laisser passer le fluide à travers ouverture de sortie uniquement lorsque le dispositif de filtrage est déplacé dans ledit premier sens de déplacement.
Avantageusement, le premier clapet d'admission est disposé en amont du premier clapet d'échappement par rapport au sens d'écoulement du fluide dans le dispositif de filtrage lorsque ce dernier est déplacé dans le premier sens de déplacement.
Avantageusement, le dispositif est agencé de manière à ce que le passage du fluide à travers l'ouverture d'entrée permette au fluide situé en amont du dispositif de filtrage lorsque ce dernier est déplacé dans le premier sens de déplacement de pénétrer dans la chambre de filtrage.
Avantageusement, le passage du fluide à travers l'ouverture de sortie permet au fluide situé dans la chambre de filtrage de s'écouler hors de la chambre de filtrage lorsque dispositif de filtrage est déplacé dans le premier sens de déplacement.
Avantageusement, l'ouverture d'entrée et l'ouverture de sortie sont disposées de manière à ce que lorsque le dispositif de filtrage est déplacé dans ledit premier sens de déplacement, le fluide traverse obligatoirement le filtre principal selon un premier sens de filtrage en passant depuis l'ouverture d'entrée jusqu'à l'ouverture de sortie.

Avantageusement, le dispositif de filtrage est configuré de manière à empêcher le fluide de traverser le filtre principal selon un deuxième sens de filtrage opposé au premier sens de filtrage lorsque le dispositif de filtrage est déplacé dans un deuxième sens de déplacement opposé au premier sens de déplacement.

D'autres caractéristiques optionnelles de l'invention, qui peuvent être mises en oeuvre de façon combinée selon toutes combinaisons ou de manière alternative, sont indiquées ci-après :
- Avantageusement, l'ouverture d'entrée débouche dans la portion interne de la chambre de filtrage et l'ouverture de sortie débouche dans la portion externe de la chambre de filtrage, de manière à ce que le fluide traverse obligatoirement le filtre principal depuis sa paroi interne en jusqu'à sa paroi externe.
Ainsi, quel que soit le sens de déplacement du dispositif de filtrage, le fluide est filtré et le filtre principal est traversé dans un unique sens. Les résidus ne sont alors pas relargués par un flux inverse. Par ailleurs, un seul filtre permet un filtrage dans les deux sens, ce qui facilite l'assemblage du dispositif de filtrage ainsi que le stockage et la manipulation des filtres usagés. Par ailleurs, tous les résidus sont piégés sur la face interne du filtre ce qui réduit les risques de pollution lors de sa manipulation.
- Avantageusement, le dispositif de filtrage est configuré pour être déplacé en translation à l'intérieur d'un contenant dans lequel est contenu le fluide.
- Avantageusement, le corps s'étend sensiblement longitudinalement.
- Le dispositif de filtrage est configuré de manière à forcer une partie du fluide au moins à traverser ledit filtre principal dans le premier sens de filtrage lorsque le dispositif de filtrage est déplacé dans le deuxième sens de déplacement.
- Avantageusement, le premier clapet d'admission est configuré pour empêcher l'entrée et la sortie du fluide respectivement dans et hors de la portion interne de la chambre de filtrage et à travers l'ouverture lorsque le dispositif de filtrage est déplacé dans le deuxième sens de déplacement.
- Avantageusement, Le premier clapet d'admission est configurée pour permettre au fluide de passer depuis l'extérieur de la chambre de filtrage jusqu'à une première portion de la chambre de filtrage située au regard d'une première paroi du filtre principal lorsque le dispositif de filtrage est déplacé dans le premier sens de déplacement.
- Avantageusement, le dispositif comprend au moins un deuxième clapet d'admission associé à une autre ouverture d'entrée et configuré pour permettre au fluide de passer depuis l'extérieur de la chambre de filtrage jusqu'à la portion interne de la chambre de filtrage via ladite autre ouverture d'entrée lorsque le dispositif de filtrage est déplacé dans le deuxième sens de déplacement et configuré pour empêcher l'entrée et la sortie du fluide respectivement dans et hors de ladite première portion via ladite autre ouverture d'entrée lorsque le dispositif de filtrage est déplacé dans le premier sens de déplacement.
- Avantageusement, le premier clapet d'admission est disposé en amont du deuxième clapet d'admission par rapport au sens d'écoulement du fluide dans le dispositif de filtrage lorsque ce dernier est déplacé dans le premier sens de déplacement.
- Avantageusement, le dispositif de filtrage est configuré pour être déplacé en translation à l'intérieur d'un contenant dans lequel est contenu le fluide.
- Alternativement, le dispositif de filtrage est configuré pour être déplacé en rotation à l'intérieur du contenant.
- Le contenant est typiquement un circuit ou une portion de circuit. Il peut également être une cuve ou un réservoir.
- Selon un mode de réalisation, le dispositif de filtrage est configuré de manière à forcer une partie du fluide au moins à traverser ledit filtre dans le premier sens de filtrage lorsque le dispositif de filtrage est déplacé dans le deuxième sens de déplacement. Ainsi, de manière particulièrement avantageuse, le fluide traverse toujours le filtre dans le premier sens de filtrage quel que soit le sens de déplacement du dispositif de filtrage. Avantageusement, le dispositif peut ainsi comprendre un unique filtre qui est traversé dans le même sens quel que soit le sens de déplacement du porte-filtre.
- Selon un mode de réalisation, le dispositif de filtrage forme au moins une chambre de filtrage comprenant le filtre et comprend:
   - au moins un premier clapet configuré pour permettre au fluide de passer depuis l'extérieur de la chambre de filtrage jusqu'à une première portion de la chambre de filtrage située au regard d'une première paroi du filtre lorsque le dispositif de filtrage est déplacé dans le premier sens de déplacement et configuré pour empêcher l'entrée et la sortie du fluide respectivement dans et hors de ladite première portion lorsque le dispositif de filtrage est déplacé dans le deuxième sens de déplacement ;
   - au moins un deuxième clapet configuré pour permettre au fluide de passer depuis l'extérieur de la chambre de filtrage jusqu'à ladite première portion de la chambre de filtrage lorsque le dispositif de filtrage est déplacé dans le deuxième sens de déplacement et configuré pour empêcher l'entrée et la sortie du fluide respectivement dans et hors de ladite première portion lorsque le dispositif de filtrage est déplacé dans le premier sens de déplacement.
- Selon un mode de réalisation, la première valve est disposée en amont de la deuxième valve par rapport au sens d'écoulement du fluide dans le dispositif de filtrage lorsque ce dernier est déplacé dans le premier sens de déplacement.
- Selon un mode de réalisation, le dispositif de filtrage comprend au moins deux ouvertures de sortie configurées pour permettre au fluide de passer depuis une portion de la chambre de filtrage située au regard d'une deuxième paroi du filtre opposée à la première paroi jusqu'à l'extérieur de la chambre de filtrage en aval du dispositif de filtrage, l'une des deux ouvertures permettant la sortie du fluide en aval du dispositif de filtrage lorsque ce dernier est déplacé dans le premier sens et l'autre des deux ouvertures permettant la sortie du fluide en aval du dispositif de filtrage lorsque ce dernier est déplacé dans le deuxième sens.
- Selon un mode de réalisation, le dispositif de filtrage comprend au moins deux clapets de sortie, chacun respectivement associé à l'une des au moins deux ouvertures de sortie. Chaque clapet de sortie est configuré pour autoriser le passage du fluide depuis la deuxième portion vers l'aval du dispositif de filtrage et pour empêcher le passage du fluide depuis l'amont du dispositif de filtrage jusqu'à la deuxième portion de la chambre de filtrage.
- Selon un mode de réalisation, chaque clapet de sortie empêche le passage du fluide jusqu'à l'ouverture de sortie qui lui est associé lorsqu'il est plaqué sur un siège de clapet et comprend une lumière disposée au droit d'un orifice d'entrée permettant au fluide situé en amont du dispositif de filtrage d'accéder aux première et deuxième valves.
- Selon un mode de réalisation, le dispositif de filtrage est configuré pour être déplacé en translation à l'intérieur du contenant et le filtre présente une forme de cylindre s'étendant selon la direction de translation du dispositif de filtrage.
- Selon un autre mode de réalisation, le dispositif de filtrage est configuré de manière à empêcher le fluide de traverser le filtre lorsque le dispositif de filtrage est déplacé dans le deuxième sens de déplacement.
- De préférence, le dispositif de filtrage comprend au moins un premier clapet disposé en aval du filtre, relativement au sens de déplacement du fluide par rapport au dispositif de filtrage lorsque ce dernier est déplacé dans le premier sens de déplacement et disposée en amont du filtre, relativement au sens de déplacement du fluide par rapport au dispositif de filtrage lorsque ce dernier est déplacé dans le deuxième sens de déplacement, ladite première valve étant configurée :
   - pour s'ouvrir sous la pression du fluide ayant traversé le filtre lorsque le dispositif de filtrage est déplacé dans le premier sens de déplacement de manière à permettre au fluide ayant traversé le filtre de quitter le dispositif de filtrage;
   - pour se maintenir fermée autrement, c'est-à-dire lorsque le dispositif de filtrage est immobile ou est déplacé dans le deuxième sens de déplacement de manière à empêcher le fluide de traverser le filtre.
- Selon un mode de réalisation, le dispositif de filtrage comprend au moins un deuxième clapet disposé en amont du filtre, relativement au sens de déplacement du fluide par rapport au dispositif de filtrage lorsque ce dernier est déplacé dans le premier sens de déplacement et disposée aval du filtre, relativement au sens de déplacement du fluide par rapport au dispositif de filtrage lorsque ce dernier est déplacé dans le deuxième sens de déplacement, ladite deuxième valve étant configurée :
   - pour s'ouvrir sous la pression du fluide lorsque le dispositif de filtrage est déplacé dans le premier sens de déplacement de manière à permettre au fluide de parvenir au filtre;
   - pour se maintenir fermée autrement, c'est-à-dire lorsque le dispositif de filtrage est immobile ou est déplacé dans le deuxième sens de déplacement de manière à empêcher du fluide ayant traversé le filtre de quitter le dispositif de filtrage.
- Selon un mode de réalisation, le dispositif de filtrage est configuré de manière à former, lorsque le dispositif de filtrage est déplacé dans le premier sens de déplacement, au moins un chemin de filtrage passant au travers du filtre et configuré de manière à former, lorsque le dispositif de filtrage est déplacé dans le deuxième sens de déplacement, au moins un chemin de fuite par lequel le fluide contourne le filtre.
- Selon un mode de réalisation, le dispositif de filtrage est configuré pour être placé au regard d'une paroi interne d'un contenant dans lequel est contenu le fluide et le chemin de fuite est formé, en partie au moins, par une portion d'espace située entre ladite paroi interne du contenant et une paroi externe du dispositif de filtrage.
- Selon un mode de réalisation, le dispositif de filtrage présente une enveloppe externe complémentaire d'une paroi interne portée par le contenant le chemin de fuite étant formé par une portion d'espace située entre ladite paroi interne du contenant et l'enveloppe externe du dispositif de filtrage.
- Selon un mode de réalisation, le dispositif de filtrage est configuré de manière à ce que, lorsque le dispositif de filtrage est déplacé dans le premier sens de déplacement, tout le fluide traversé par le dispositif de filtrage passe par le chemin de filtrage. Alternativement, le dispositif de filtrage est configuré de manière à ce que, lorsque le dispositif de filtrage est déplacé dans le premier sens de déplacement, une partie du fluide traversé par le dispositif de filtrage passe par le chemin de filtrage et une autre partie du fluide traversé par le dispositif de filtrage passe par le chemin de fuite.
- Selon un mode de réalisation, la section minimale de passage du chemin de fuite est inférieure à 1/3, voire 1/5 et de préférence inférieure à 1/8 de la section minimale du chemin de filtrage.
- Selon un mode de réalisation, le dispositif de filtrage comporte deux étages de filtration, chaque étage comprenant un filtre, le dispositif de filtrage étant configuré de manière à ce que :
   - lorsque le dispositif de filtrage est déplacé dans le premier sens de déplacement, au moins une partie du fluide traverse le filtre du premier étage et ne traverse pas le filtre du deuxième étage,
   - lorsque le dispositif de filtrage est déplacé dans le deuxième sens de déplacement, au moins une partie du fluide traverse le filtre du deuxième étage et ne traverse pas le filtre du premier étage.

Ainsi, le chemin de filtrage formé par un étage débouche dans ou prolonge le chemin de fuite de l'autre étage. Le dispositif de filtrage présente ainsi un fonctionnement symétrique.

Selon un mode de réalisation, les premier et deuxième filtres sont successivement disposés selon la direction de déplacement du dispositif de filtrage.

Chaque étage est équipé d'au moins un clapet et de préférence deux clapets. Les clapets des deux étages sont montés en opposition de manière à n'ouvrir qu'un seul étage par sens de déplacement du dispositif de filtrage.
- Selon un mode de réalisation, la forme du filtre définit une cavité présentant au moins une ouverture et au moins une paroi filtrante présentant une face interne tournée vers l'intérieur de la cavité et une face externe tournée vers l'extérieur la cavité. Le dispositif de filtrage est configuré de manière à ce que le fluide pénètre dans la cavité par l'ouverture et s'en échappe en traversant la paroi filtrante depuis la face interne jusqu'à la face externe lorsque le dispositif de filtrage est déplacé dans le premier sens. Ainsi, le fluide traverse le filtre depuis l'intérieur vers l'extérieur de la cavité. Les résidus s'accumulent alors sur la face interne de la cavité et ne sont pas exposés à l'extérieur. Ainsi en cas de retrait et ou de manipulation d'un filtre usagé, les résidus restent piégés à l'intérieur de la cavité ce qui réduit les risques de décrochage et de dispersion des résidus ainsi que la contamination du milieu environnant.
- De préférence, la paroi filtrante est continue et présente un fond opposé à l'ouverture. Ainsi les résidus peuvent s'accumuler dans le fond.
- Selon un mode de réalisation, le dispositif est configuré pour être déplacé en translation à l'intérieur d'un contenant. La cavité s'étend selon la direction de translation du dispositif de filtrage et présente de préférence une forme de portion de cône s'étendant selon la direction de translation du dispositif de filtrage.
- De manière plus générale, la cavité s'étend selon la direction du déplacement du dispositif de filtrage.
- Selon un mode de réalisation, le dispositif de filtrage comporte un dispositif de vidange configuré pour permettre un écoulement du fluide sous l'effet de la gravité dès lors que le dispositif de filtrage est suffisamment éloigné d'une paroi interne du contenant pour pouvoir s'écouler librement en périphérie du dispositif de filtrage.
- Selon un mode de réalisation, le dispositif de vidange comprend au moins une ouïe de vidange permettant au fluide qu'il contient de s'écouler vers l'extérieur en contournant la valve contrôlant la sortie du fluide hors de la chambre de filtrage. Ainsi, même si le(s) clapet(s) et/ou le(s) valve(s) est (sont) fermés, le dispositif de filtrage se vidange automatiquement.
- Selon un mode de réalisation, le dispositif de vidange comportant un filtre de vidange, est disposé de manière à ce que du fluide passant par l'ouïe de vidange traverse obligatoirement le filtre de vidange.
- Selon un mode de réalisation, le filtre est fixé de manière amovible par rapport au porte-filtre. La section maximale du filtre, prise dans un plan perpendiculaire à ladite direction de déplacement, est supérieure à 60% de la section de la paroi interne du contenant et de préférence supérieure à 70% et de préférence supérieure à 90%.
- Selon un mode de réalisation, le porte-filtre est en métal et le filtre est de préférence en métal.
- Selon un mode de réalisation, toutes les pièces constituant les clapets sont en métal.
- De préférence, le fluide est un liquide. Selon un mode de réalisation, le liquide comprend ou est formé de métal liquide.
- Selon un autre mode de réalisation, le dispositif de filtrage comprend un dispositif de dérivation du fluide, comprenant au moins une valve et de préférence des ouvertures, orifices et conduits, et configuré de manière à ce que lorsqu'une partie du fluide contenu dans le contenant traverse le filtre selon le premier sens de traversée, le fluide traverse le filtre depuis une première paroi jusqu'à une deuxième paroi du filtre. Le dispositif de dérivation est en outre configuré de manière à empêcher le fluide de traverser le filtre depuis ladite deuxième paroi jusqu'à la première paroi du filtre lorsque le dispositif de filtrage est déplacé dans le deuxième sens de déplacement.

Selon un autre mode de réalisation, l'invention porte sur un système comprenant un contenant apte à contenir un fluide à filtrer et un dispositif de filtrage selon l'invention, disposé à l'intérieur du contenant et configuré pour être déplacé manuellement ou mécaniquement à l'intérieur du contenant de manière à filtrer le fluide au moins lorsqu'il est déplacé dans un premier sens.

D'autres caractéristiques optionnelles de l'invention, qui peuvent être mises en oeuvre de façon combinée selon toutes combinaisons ou de manière alternative, sont indiquées ci-après :
- Avantageusement, le contenant est fixe. Selon un mode de réalisation, le contenant est une conduite ou une cuve. Selon un mode de réalisation, le système est configuré de manière à ce que le dispositif de filtrage puisse être déplacé librement dans le contenant. Ainsi, le dispositif de filtrage n'est pas articulé sur le contenant. Par ailleurs, le dispositif de filtrage n'est pas contraint géométriquement par le contenant. Selon un mode de réalisation, le contenant présente une paroi interne et le dispositif de filtrage comporte au moins un racleur longitudinal configuré pour racler la paroi interne du contenant et mettre en suspension les résidus collés sur les parois du contenant.
- Selon un mode de réalisation, le racleur longitudinal forme saillie par rapport à une enveloppe externe du dispositif de filtrage.
- Selon un mode de réalisation, le dispositif de filtrage est configuré pour être déplacé en translation à l'intérieur du contenant et le racleur longitudinal s'étend principalement dans un plan perpendiculaire à la direction de translation dispositif de filtrage. Alternativement, si le dispositif de filtrage est configuré pour être déplacé en rotation à l'intérieur du contenant alors le racleur s'étend principalement selon une direction parallèle à l'axe de rotation du dispositif de filtrage.
- Selon un mode de réalisation, le dispositif de filtrage comprend, à au moins l'une de ses extrémités, au moins un racleur d'extrémité formant saillie au-delà d'une enveloppe externe du dispositif de filtrage pour racler une paroi de fond du contenant et mettre en suspension les résidus déposés sur le fond.

Selon un autre mode de réalisation, l'invention porte sur un procédé de dépollution d'un fluide, le procédé comprenant le déplacement au sein d'un fluide à filtrer d'un dispositif de filtrage selon l'invention immergé au moins en partie dans le fluide.

Selon un mode de réalisation non limitatif, le fluide est contenu dans une conduite ou dans une cuve équipant un réacteur nucléaire ou une usine et le déplacement du dispositif de filtrage est effectué de manière manuelle ou mécanique.

Selon un autre mode de réalisation non limitatif, le fluide est de l'eau contenue dans la mer ou dans un lac et le déplacement du dispositif de filtrage est provoqué par de la houle ou des vagues. Dans ce cas le dispositif de filtrage comprend un dispositif de flottaison lui permettant de rester en surface ou à une profondeur souhaitée. Dans ce mode de réalisation, le dispositif de filtrage n'évolue pas dans un contenant, sauf à considérer que le littoral et le fond bordant l'étendue d'eau forment un contenant. Le dispositif de filtrage est configuré pour être mis en mouvement dans l'eau par les vagues et la houle. Ainsi, le dispositif de filtrage est entrainé en mouvement, par exemple selon un mouvement de balancier, par rapport au sol marin.

Les autres objets, caractéristiques et avantages de la présente invention apparaîtront à l'examen de la description suivante et des dessins d'accompagnement. Il est entendu que d'autres avantages peuvent être incorporés.

### BREVE DESCRIPTION DES FIGURES

Les dessins joints sont donnés à titre d'exemples et ne sont pas limitatifs de l'invention. Ces dessins sont des représentations schématiques et ne sont pas nécessairement à l'échelle de l'application pratique.

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- La figure 1 est un schéma d'une vue en coupe longitudinale d'un premier mode de réalisation de l'invention, le dispositif de filtrage étant déplacé dans un premier sens de déplacement par rapport à une conduite dans lequel il est disposé.
- La figure 2 est un schéma d'une vue en coupe du mode de réalisation illustré en figure 1 dans lequel le dispositif de filtrage est déplacé dans un deuxième sens de déplacement opposé au premier sens de déplacement.
- La figure 3 est une vue en coupe du mode de réalisation illustré en figure 1 dans lequel le dispositif de filtrage est retiré de la conduite ou est placé dans une section plus large de la conduite pour assurer de manière automatique la vidange du dispositif de filtrage.
- La figure 4 est un schéma d'une vue en coupe longitudinale d'un deuxième mode de réalisation de l'invention comportant deux étages de filtration et permettant un filtrage par l'un de ces deux étages dans chacun des sens de filtration.
- La figure 5 est un schéma d'une vue en coupe longitudinale d'un troisième mode de réalisation permettant une filtration du fluide par le même filtre quel que soit le sens de déplacement du dispositif de filtrage, cette figure fait apparaitre le flux du fluide lorsque le dispositif de filtrage est déplacé dans le deuxième sens.
- La figure 6 reprend la figure 5 et fait apparaitre le flux du fluide lorsque le dispositif de filtrage est déplacé dans le premier sens.
- La figure 7 représente le dispositif de filtrage du mode de réalisation de la figure 5 selon une coupe longitudinale décalée de 90° par rapport à la coupe de la figure 5 et au cours d'une vidange.
- La figure 8 est une vue en perspective du mode de réalisation de la figure 8.

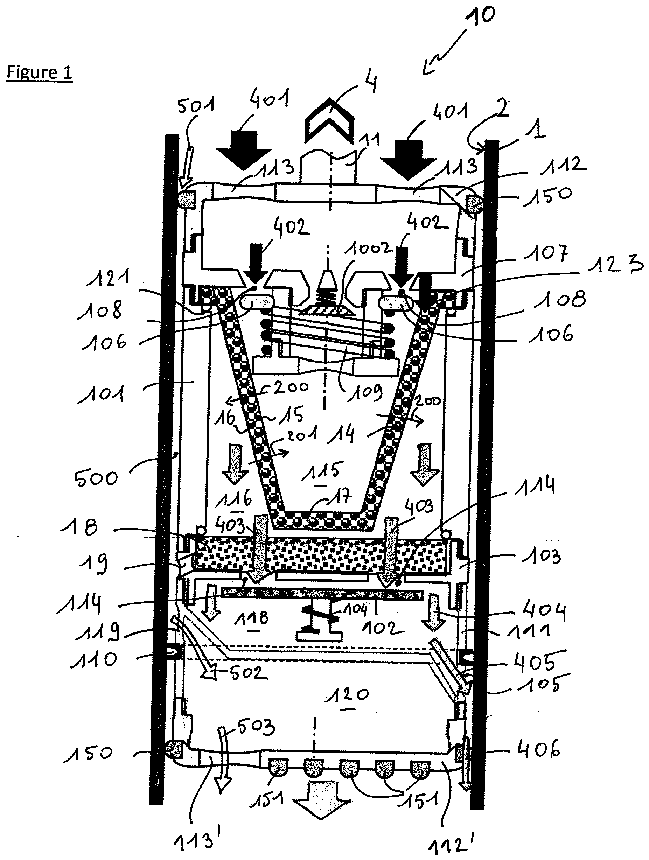

Un premier mode de réalisation va maintenant être décrit en référence aux **figures 1 à 3**.

Dans ce mode de réalisation, le système de filtrage comporte un dispositif de filtrage 10 inséré dans un contenant 1. Le contenant 1 est typiquement une conduite de passage du fluide. Il peut également être un réservoir ou une cuve.

Le dispositif de filtrage 10 comporte un filtre principal 14, un porte-filtre 100 et un dispositif de déplacement du porte-filtre. Typiquement, ce dispositif de déplacement est une perche 11 solidaire du porte-filtre 100 et manipulable par un opérateur ou actionnable de manière motorisée. Sous l'actionnement du dispositif de déplacement, le dispositif de filtrage 10 coulisse le long de la conduite et fait ainsi office de piston à l'intérieur de cette dernière.

Le dispositif de filtrage 10 forme, dans ce mode de réalisation, un seul étage de filtration. L'étage de filtration comporte le filtre principal 14 et une chambre de filtrage à l'intérieur de laquelle est disposé le filtre principal 14, la chambre de filtrage étant délimitée par un corps 101 du porte-filtre 100 s'étendant sensiblement longitudinalement et par deux parois transversales formant chacune un bloc clapet 103, 107. La chambre de filtrage est également équipée d'au moins une valve 102, 106 comme cela sera détaillé par la suite. De préférence, la chambre de filtrage présente deux extrémités et comporte au moins une valve 102, 106 à chacune de ses extrémités. A l'exception d'ouïes de vidange 19, 19' qui seront détaillées par la suite, la chambre de filtrage définit une enceinte étanche dont l'accès est contrôlé par les valves 102, 106. Le filtre principal 14 délimite dans la chambre de filtrage, deux portions 115, 116 situées de part et d'autre des parois internes 15 et externes 16 du filtre principal 14.

L'étage de filtration comporte au moins une première valve d'échappement 102 également désignée premier clapet d'échappement coopérant avec un bloc clapet 103 solidaire du corps 101 du porte-filtre 100 et présentant au moins une ouverture de sortie 114. Ce premier clapet d'échappement 102 est configuré pour laisser passer le fluide à travers les ouvertures de sortie 114 uniquement lorsque le dispositif de filtrage 10 est déplacé dans un premier sens de déplacement 4.

Ainsi, lorsque le dispositif de filtrage 10 est déplacé dans un deuxième sens de déplacement 5 opposé au premier sens de déplacement 4 ou lorsque le dispositif de filtrage 10 est immobile par rapport au fluide, le premier clapet d'échappement 102 bloque le passage du fluide et l'empêche d'accéder à la chambre de filtrage. Typiquement, le premier clapet d'échappement 102 est formé par un clapet monté coulissant sur le bloc clapet 103 formant un siège de clapet. Un élément de rappel tel que le ressort 104 applique un effort sur le clapet pour maintenir ce dernier au contact du siège lorsque le fluide n'exerce pas une pression inverse suffisante.

Ce premier clapet d'échappement 102 est disposé en aval du filtre principal 14 lorsque le dispositif de filtrage est déplacé dans le premier sens de déplacement 4. Ainsi, ce premier clapet d'échappement 102 empêche le fluide filtré de s'échapper hors de la chambre de filtrage lorsque le dispositif de filtrage 10 est actionné dans le deuxième sens de déplacement 5.

L'étage de filtration comporte une autre valve dite premier clapet d'admission 106 coopérant avec le bloc clapet 107 et étant plaqué contre ce dernier par un élément de rappel tel que le ressort 109. Ce premier clapet d'admission 106 est configuré pour autoriser l'entrée du fluide dans la portion 115 de la chambre de filtrage lorsque le dispositif de filtrage 10 est déplacé dans le premier sens de déplacement 4 et pour l'en empêcher autrement.

De préférence, le dispositif de filtrage 10 comporte une virole 112 solidaire du corps 101 via le bloc clapet 107 et sur laquelle est fixée la perche 11. Cette virole 112 comprend des orifices 113 permettant au fluide d'atteindre le premier clapet d'admission 106.

Dans ce mode de réalisation, le premier sens de déplacement 4 correspond ainsi à un mouvement généré par une traction exercée sur la perche 11.

De préférence, une deuxième virole 112' est prévue pour former l'autre extrémité du dispositif de filtrage 10. Cette autre virole 112' est de préférence également munie d'au moins un orifice 113'.

Le dispositif de filtrage 10 comprend également un joint d'étanchéité 110 qui empêche ou limite le passage du fluide entre une paroi interne 2 du contenant 1 et le dispositif de filtrage 10.

Le porte-filtre 100 comprend au moins une ouverture de sortie 105 disposée en aval du premier clapet d'échappement 102 lorsque dispositif de filtrage 10 est déplacé dans le premier sens 4 et permettant de mettre en communication le fluide s'échappant du premier clapet d'échappement 102 avec une portion d'espace en aval du joint 110. De préférence, une chemise 111 forme avec le bloc clapet 103 une chambre de sortie 118 et porte l'ouverture de sortie 105. La virole 112' est fixée sur la chemise 111.

Le cheminement du fluide va maintenant être décrit lors d'un déplacement du dispositif de filtrage 10 selon le premier sens 4 en référence à la figure 1. Lorsque le dispositif de filtrage 10 est déplacé vers le haut en référence à la figure 1, le fluide traverse le dispositif de filtrage 10 du haut vers le bas comme indiqué par les flèches 401 à 406. L'amont et l'aval du dispositif de filtrage 10 sont donc situés en haut et en bas sur cette figure 1.

Le fluide traverse 401 les orifices 113 de la virole 112 et parvient au bloc clapet 103.

Sous l'effet de la pression du fluide, le clapet du deuxième clapet d'admission 106 s'ouvre et laisse passer le fluide à travers l'ouverture d'entrée 108. Le fluide parvient ainsi dans la portion 115 de la chambre de filtrage au regard de la paroi interne 15 du filtre principal 14. Cette portion 115 de la chambre de filtrage est fermée à l'exception des ouvertures d'entrée 108. Le fluide est alors forcé de traverser le filtre principal 14 dans le sens 200 de filtrage, c'est-à-dire depuis la paroi interne 15 jusqu'à la paroi externe 16 du filtre principal 14.

Le fluide parvient ainsi dans la portion 116 de chambre de filtrage au regard de la paroi externe 16 du filtre principal 14. Cette portion 116 de chambre de filtrage est fermée à l'exception des ouïes de vidange 19 et des ouvertures de sortie 114.

La section de ces dernières étant significativement supérieure à celle des ouïes de vidange 19, le fluide exerce une pression sur le premier clapet d'échappement 102 et l'écarte de son siège. Le fluide passe 403 à travers les ouvertures de sortie 114 pour parvenir dans la chambre de sortie 118, dont au moins l'ouverture de sortie 105 débouche 405 hors du dispositif de filtrage 10 et en aval du joint 110 pour s'échapper vers l'aval 406 du dispositif de filtrage 10. On notera que de préférence un filtre de vidange 18 est prévu pour filtrer le fluide s'écoulant depuis la portion 116 de chambre de filtrage en direction des ouvertures 114 et des ouïes de vidange 19.

Le fluide a ainsi parcouru un chemin de filtrage illustré par les flèches 401 à 406 au cours duquel il a traversé le filtre principal 14 pour laisser dans ce dernier les résidus qu'il contient. On notera qu'une portion du fluide peut également s'engager dans un chemin de fuite 500 défini par l'espace entre la paroi interne 2 du contenant 1 et l'enveloppe externe du dispositif de filtrage 10.

Plus précisément, le fluide s'engage 501 dans le chemin de fuite 500 et pénètre dans le dispositif de filtrage 10 par une ouverture de fuite 119 portée par la chemise 111 et située en amont du joint 110. De préférence, le fluide pénètre ainsi 502 dans une chambre de fuite 120 définie par la chemise 111 et sort 503 de la virole 112' en aval du dispositif de filtrage 10 par l'orifice 113'.

La section du chemin de fuite 500 est définie par les dimensions relatives de la paroi interne 2 du contenant 1 et de la section maximale du dispositif de filtrage 10 en amont du joint 110.

Cette section est déterminée en fonction du taux de filtrage souhaité, de la résistance appliquée au dispositif de filtrage 10 et du nombre de mouvements de va et vient que l'on souhaite effectuer pour obtenir un filtrage satisfaisant. Une section nulle pour le chemin de fuite 500 conduit à filtrer en un seul passage tout le fluide. Une large section nécessite d'effectuer un nombre élevé de passages pour obtenir un filtrage satisfaisant.

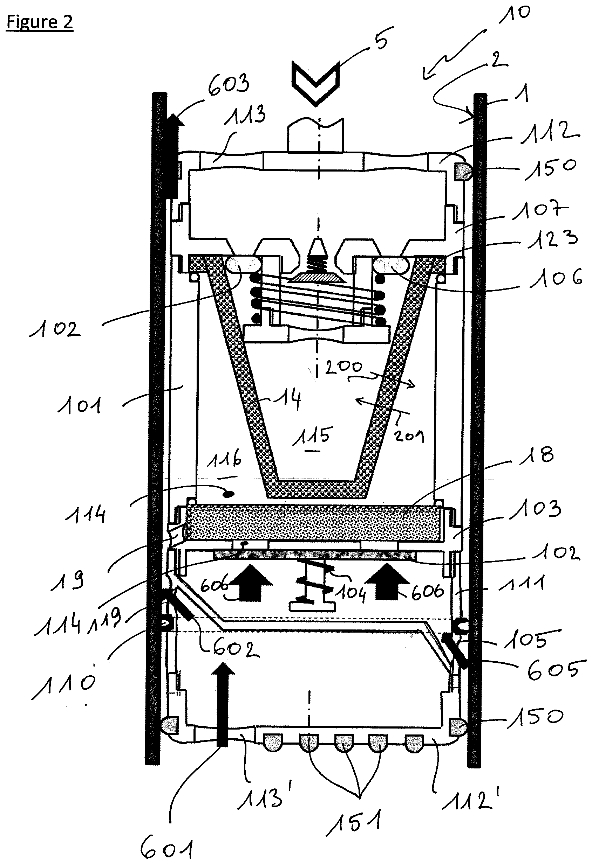

Le cheminement du fluide va maintenant être décrit lors d'un déplacement du dispositif de filtrage 10 selon le deuxième sens 5 et en référence à la **figure 2****.**

Lorsque le dispositif de filtrage 10 effectue une translation, en référence à la figure 2 vers le bas, le fluide traverse le dispositif de filtrage 10 depuis le bas vers le haut comme indiqué par les flèches 601 à 606. L'amont et l'aval du dispositif de filtrage 10 sont dans ce cas situés respectivement en bas et en haut sur la figure 2.

Le fluide pénètre 601 dans la chambre de fuite 120 par l'orifice 113' de la virole 112'. L'ouverture de fuite 119 permet au fluide de passer 602 dans le chemin de fuite 500 en aval du joint 110 et de parcourir le chemin de fuite 500 jusqu'à en sortir en aval 603 du dispositif de filtrage 10. La portion de fluide qui passe en amont du joint 110 entre la paroi interne 2 du contenant 1 et le dispositif de filtrage 10 pénètre 605 par l'ouverture de sortie 105 dans la chambre de sortie 118. Le fluide y est alors bloqué 606 par le premier clapet d'échappement 102 qui reste plaqué sur son siège sous l'effet de la pression du fluide et de son ressort 104. Le fluide ne pénètre ainsi pas dans la chambre de filtrage.

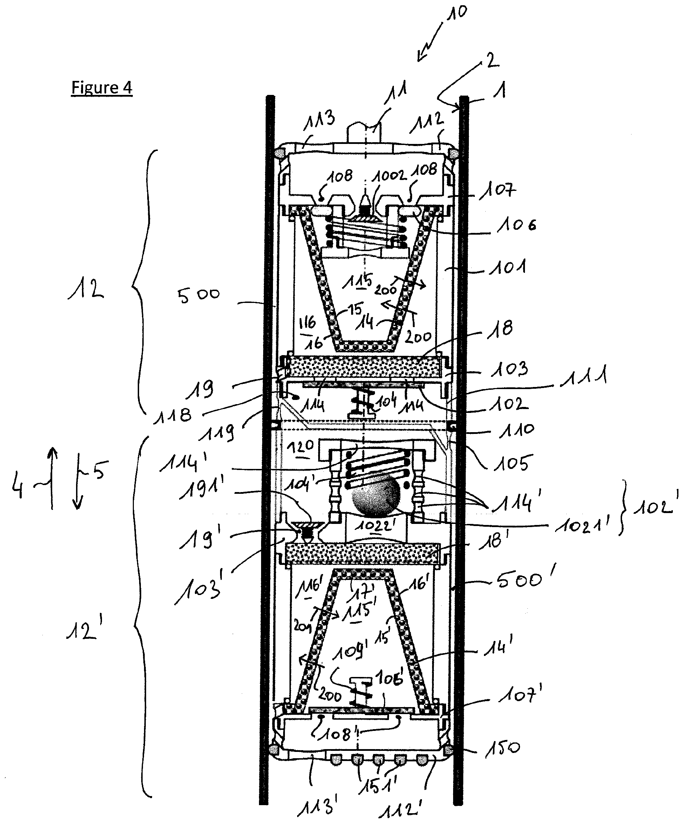

Si une partie de fluide pénètre depuis le chemin de fuite 500 jusque dans la portion 116 de chambre de filtrage en passant par l'ouïe de vidange 19, alors ce fluide ne peut s'échapper en aval de la chambre de filtrage puisque le deuxième clapet d'admission 106 le bloque. Comme cela sera détaillé en référence au mode de réalisation illustré en figure 4, on peut prévoir un clapet de vidange configuré pour empêcher que le fluide ne passe depuis le chemin de fuite vers la chambre de filtrage via l'ouïe 19.

Ainsi, quel que soit le trajet emprunté par le fluide, il ne traverse pas la chambre de filtrage. En fonction de l'efficacité du clapet de vidange, il peut même ne pas pénétrer dans la chambre de filtrage.

On peut prévoir un clapet 1002 ayant pour siège le bloc clapet 107.

De préférence, la fonctionnalité du clapet 1002 n'est pas la même que celle de la valve 106. Avantageusement, la fonction du clapet 1002 est double. Elle permet une fonction de vidange en assurant en position ouverte au repos, comme illustré en figure 4, une ouverture de la chambre 115 et une mise en équipression (intérieur/extérieur) du fluide présent dans les chambres 115 et 116 afin de permettre un libre écoulement vers l'extérieur du fluide éventuellement encore présent dans ces chambres. Ce clapet 1002 doit être fermé de la même façon que 106 lorsque le fluide pousse dans le sens de déplacement 5. Dans le sens de déplacement 4, ce clapet 1002 contribue comme 106 au passage du fluide mais ne constitue pas le passage privilégié de celui-ci.

Selon l'exemple de réalisation illustré en figure 1 à 4, la valve d'admission présente une forme d'anneau. Le clapet 1002 est situé à l'intérieur de l'anneau, de préférence en son centre.

Ainsi, l'étage de filtration est unidirectionnel. Le filtre principal 14 n'est traversé que dans un seul sens 200 par le fluide et ceci quel que soit le sens de déplacement du dispositif de filtrage 10. On évite ainsi que les résidus accumulés dans le filtre ne soient relargués sous l'effet d'un flux inverse 201. L'invention permet ainsi d'améliorer considérablement le filtrage et la sécurité lors de la manipulation du filtre.

Ainsi, dans ce mode de réalisation illustré en figures 1 et 2, le dispositif de dérivation qui permet de contrôler le cheminement du fluide à travers le dispositif de filtrage comprend notamment les valves 102, 106, les ouvertures d'entrée 108, les ouvertures de sortie 105, 114.

Par ailleurs, on notera que le filtre principal 14 forme une cavité. Comme décrit précédemment, le filtre principal 14 n'est traversé que dans le sens 200, c'est-à-dire depuis sa paroi interne 15 jusqu'à sa paroi externe 16. Ainsi, les résidus sont piégés à l'intérieur de la cavité. Cela permet d'éviter la dispersion des résidus lors de la manipulation d'un filtre usagé.

De préférence, la cavité présente une ouverture accessible depuis les ouvertures 108 du bloc clapet 107 et présente également un fond 17. En dehors de son ouverture, le filtre principal 14 est de préférence continu. Manipulé avec son fond tourné vers le bas, le filtre principal 14 permet ainsi d'éviter que les résidus s'échappent par gravité, ce qui renforce encore la sécurité.

De préférence, le filtre principal 14 est ainsi démontable pour être remplacé ou nettoyé. Il est par exemple monté serré entre le corps 101 et le bloc clapet 107 par écrasement du joint filtre 123 entre ces deux pièces. Plus précisément, le bloc clapet 107 présente une section interne qui correspond à la section externe de la base du filtre principal 14 sur laquelle prend appui ce dernier, ce qui permet un positionnement aisé du filtre principal 14 par rapport au bloc clapet 107. Le corps 101 présente quant à lui un épaulement 121 configuré pour venir au contact du joint filtre 123, lui-même au contact de la base du filtre principal 14 sur une face opposée à celle qui est en appui sur le bloc clapet 107.

Le bloc clapet 107 est assemblé sur le corps 101 par exemple en étant vissé sur ce dernier.

Le joint filtre 123, réalisé dans un matériau filtrant, assure le blocage du filtre 14.

Afin de retirer le filtre principal 14, il suffit de désassembler le bloc clapet 107 et le corps 101 ce qui permet d'accéder au filtre principal 14 et de le saisir aisément. L'invention permet ainsi un remplacement particulièrement simple, rapide et fiable du filtre principal 14.

De préférence, au moins un racleur circonférentiel 150 monté en périphérie du dispositif de filtrage 10 forme saillie au-delà de l'enveloppe externe de ce dernier afin de racler la paroi interne 2 du contenant 1 lors du déplacement du dispositif de filtrage 10. Les impuretés qui peuvent se déposer sur les parois 2 sont ainsi décrochées et mises en suspension. De préférence, le racleur 150 présente une section discontinue pour permettre le passage du fluide. Avantageusement, on dispose selon la direction de translation du dispositif de filtrage 10 plusieurs racleurs circonférentiels 150 avec un décalage angulaire autour de cette direction, de manière à ce que la superposition des racleurs circonférentiels 150 selon une projection perpendiculaire à la direction de translation, présente un profil continu sur tout le pourtour du dispositif de filtrage 10, permettant ainsi de racler toute la surface de la paroi interne 2, quand bien même le dispositif de filtrage 10 n'effectue que des mouvements de translation.

Selon mode de réalisation alternatif ou combiné avec les racleurs circonférentiels 150, le joint 110 peut être configuré pour faire office de racleur. Le dispositif de filtrage 10 comprend également des racleurs d'extrémité 151, configurés pour racler une paroi du contenant 1 disposé sensiblement perpendiculairement à la direction de translation du dispositif de filtrage 10. Une telle paroi peut par exemple constituer un coude, une conduite ou le fond d'une cuve.

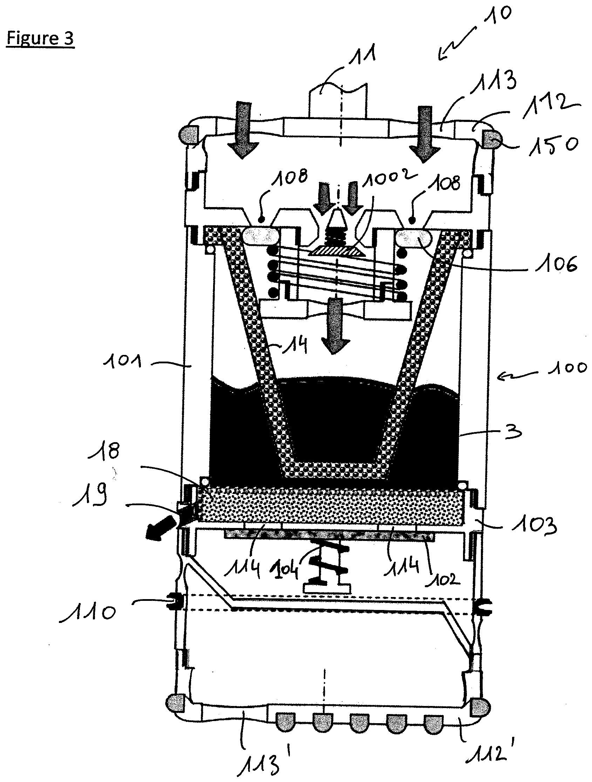

La figure 3 illustre la vidange automatique du dispositif de filtrage 10 lorsqu'il est retiré du fluide ou lorsqu'il est amené dans une section du contenant 1 suffisamment large pour que le joint 110 ne s'applique pas sur la paroi interne 2 du contenant 1. Le fluide 3 accumulé dans la chambre de filtrage s'écoule par gravité à travers le filtre de vidange 18. Le fluide 3 est bloqué au niveau des ouvertures de sortie 114 par le premier clapet d'échappement 102 et s'écoule par l'ouïe de vidange 19. Cette vidange peut être effectuée hors du contenant 1, voire à l'intérieur même du contenant 1 dans un volume du contenant ne comportant pas de fluide. Dans ce dernier cas, le fluide 3 qui s'écoule de la vidange reste dans le contenant 1 et le dispositif de filtrage 10 peut être retiré du contenant 1 sans aucun écoulement de fluide ou avec quelques gouttes uniquement. Cela s'avère en pratique très avantageux, lorsque le fluide présente un danger de type radiologique et/ou chimique voire bactériologique.

Dans le mode de réalisation décrit en référence aux figures 1 à 3, le dispositif de filtrage 10 comporte un unique étage de filtration. La filtration ne s'effectue que lorsque le dispositif de filtrage 10 est déplacé dans l'un seulement des sens, celui référencé 4. On peut ainsi qualifier ce dispositif de filtrage 10 d'unidirectionnel.

Le mode de réalisation qui va maintenant être décrit en référence à la figure 4 est bidirectionnel, c'est-à-dire qu'il filtre le fluide dans les deux sens de déplacement. Pour cela, le dispositif de filtrage 10 présente deux étages 12, 12' de filtration. Chacun des étages assure un filtrage dans un sens. Ces deux étages 12, 13 sont de préférence symétriques. Ainsi, lorsque le dispositif de filtrage 10 est déplacé selon le sens 4, l'étage 12 assure le filtrage et le filtre de l'étage 13 n'est pas traversé par le fluide. Inversement, lorsque le dispositif de filtrage 10 est déplacé selon le sens 5, l'étage 13 assure le filtrage et le filtre de l'étage 12 n'est pas traversé par le fluide. L'étage 12 correspond au dispositif de filtrage 10 décrit en référence aux figures 1 à 3. L'étage 13 correspond également au dispositif de filtrage 10 décrit en référence aux figures 1 à 3 en étant disposé de manière symétrique à l'étage 12 selon un plan perpendiculaire à la direction de déplacement du dispositif de filtrage 10 et passant par le joint 110. Ainsi, lorsque le dispositif de filtrage 10 est placé dans le sens 4, le fluide s'échappe (voir la flèche 405 de la figure 1) hors de la chambre 118 par l'ouverture de sortie 105, ce fluide parvient dans le volume fermé par la paroi externe du dispositif de filtrage 10 en aval du joint 110 et la paroi interne 2 du contenant 1, volume qui correspond au chemin de fuite 500' pour l'étage 13. Le fluide ne rentre alors plus dans le dispositif de filtrage 10 et s'écoule en aval. Le fluide n'étant pas entré dans la chambre de filtrage de l'étage 13 mais ayant emprunté le chemin de fuite 500 débouche par l'ouverture de fuite 119 dans la chambre de fuite 120. Cette chambre de fuite 120 correspond pour l'étage 13 à une chambre de sortie. Le fluide parvenant dans cette chambre 120 maintient fermée la seconde valve d'échappement 102' ce qui l'empêche de parvenir dans la chambre de filtrage de l'étage 13.

A titre d'illustration, dans cet exemple, la seconde valve d'échappement 102' présente une structure différente le premier clapet d'échappement 102 qui lui est fonctionnellement symétrique. En effet, alors que le premier clapet d'échappement 102 repose sur un clapet translatif, la seconde valve d'échappement 102' repose sur un clapet à bille 1021' avec un siège 1022' de section complémentaire. Un moyen de rappel tel que le ressort 104' exerce sur la bille 1021' une force de maintien sur son siège 1022' pour assurer une fermeture de l'ouverture de sortie 114' excepté lorsque le fluide exerce une pression suffisante sur la bille 1021' pour contrer la force du ressort et écarter la bille 1021' de son siège 1022'.

Une telle force ne peut s'exercer que lors d'un déplacement du dispositif de filtrage 10 dans le sens 5.

Avec un déplacement dans le sens 4, la bille 1021' reste au contact du siège 1022' et le fluide ne peut gagner la chambre de filtrage de l'étage 13.

Ainsi, le mode de réalisation représenté en figure 4 illustre trois types différents de valves. On comprendra que pour chacune des valves de chacun des modes de réalisation de l'invention, l'un quelconque de ces types de valves, voire tout autre type de valve, peut être utilisé. Ok

De préférence, comme illustré, une chemise 111 est assemblée à l'une de ses extrémités au bloc clapet 103 du premier étage 12 et à l'autre de ses extrémités au bloc clapet 103' du second étage 13. Cette chemise définit avec le bloc clapet 103 la chambre de sortie 118 et définit avec le bloc clapet 13 la chambre de sortie 120 pour le deuxième étage 13. Cette chemise 111 porte les ouvertures 105 et 119.

On notera également que dans ce mode de réalisation, un clapet de vidange 191' a été illustré comme alternative au mode de réalisation de l'étage 12. Ce clapet de vidange 191' empêche le fluide d'accéder au filtre de vidange 18' lors d'un déplacement dans le sens 4. Ce clapet peut être prévu sur tous ou l'un seulement des étages 12 ou 12' et reste optionnel.

Lorsque le dispositif de filtrage 10 est déplacé dans le sens 5, le fluide s'engouffre, pour partie au moins, dans l'ouverture 113' de la virole 112' de l'étage 12'. La seconde valve d'admission 106', que le ressort 109' tend à plaquer contre son siège porté par le bloc clapet 107', s'ouvre sous l'effet de la pression du fluide qui pénètre dans la portion 115' de la chambre de filtrage, traverse la paroi du filtre principal 14' et parvient dans la portion 116' de la chambre de filtrage. De préférence, un filtre 18' de vidange et prévu. Le fluide traverse alors ce filtre 18' de vidange et exerce sur la bille 1021' une force permettant d'ouvrir la seconde valve d'échappement 102'. Le fluide s'échappe par les ouvertures de sortie 114' et pénètre dans la chambre 120 dont il s'échappe par l'ouverture 119 située en aval du joint 110. Le fluide emprunte alors le chemin de fuite 500 pour s'écouler le long de la paroi externe du dispositif de filtrage 10 et passer en aval de ce dernier.

La portion de fluide passant par le chemin de fuite 500' depuis l'amont de la virole 112' s'engage dans l'ouverture 105 avant d'être piégé dans la chambre 118 dont le premier clapet d'échappement 102 demeure fermée.

Ainsi, lorsque le dispositif de filtrage 10 est déplacé dans le sens 4, le filtre principal 14 du premier étage 12 filtre le fluide et le fluide ne traverse pas le filtre principal 14' du deuxième étage 13. Inversement, lorsque le dispositif de filtrage 10 est déplacé dans le sens 5, le filtre principal 14' du deuxième étage 13 filtre le fluide et le fluide ne traverse pas le filtre principal 14 du premier étage 12.

Ainsi, à chaque sens de progression du fluide, les clapets montés en opposition n'ouvrent qu'un seul étage de filtration.

Dans ce mode de réalisation illustré en figure 4, le dispositif de dérivation qui permet de contrôler le cheminement du fluide à travers le dispositif de filtrage comprend notamment les valves/clapets d'admission 706, 706', 106, 106', les ouvertures d'entrée 108, 108', les ouvertures de sortie 105, 114, 114', 119.

Le mode de réalisation de la figure 4 présente les avantages mentionnés précédemment pour le mode de réalisation illustré en figures 1 à 3. De plus il présente pour avantage d'être bidirectionnel.

De préférence, dans chacun des modes de réalisation de l'invention, chaque bloc clapet comprend plusieurs clapets comme cela est illustré sur les figures.

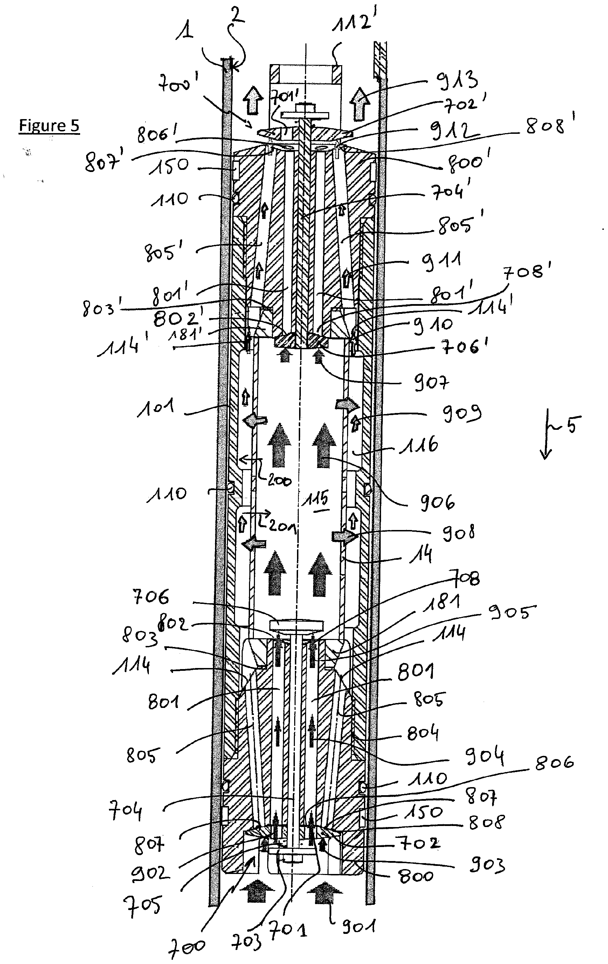

Le mode de réalisation illustré en **figures 5****,** **6****,** **7** **et** **8** présente les avantages des modes de réalisation illustrés en figures 1 à 3.

Il est également bidirectionnel. Par ailleurs, il présente pour avantage d'utiliser un unique filtre pour assurer le filtrage dans chacun des sens de déplacement et tout en évitant à la paroi du filtre d'être traversée dans les deux sens 200, 201.

Ce dispositif de filtrage 10 comprend un corps 101 qui coopère à chacune de ses extrémités avec un bloc clapet 800, 800' de sorte à former une enceinte étanche à l'exception d'ouvertures d'entrée 708, 708' et d'ouverture de sortie 114, 114' et des ouïes 19, 19' de vidange optionnelles.

Un filtre principal 14 est logé à l'intérieur de l'enceinte formant la chambre de filtrage. Un dispositif de dérivation comprenant des valves/clapets d'admission 706, 706' permet d'autoriser ou d'empêcher le fluide d'accéder à la chambre de filtrage. La chambre de filtrage présente une portion interne 115 délimitée par la paroi interne 15 du filtre principal 14 et par les blocs clapets 800, 800' ainsi qu'une portion externe 116 délimitée par la paroi externe 16 du filtre principal 14, par une paroi interne du corps 101 et par les blocs clapets 800, 800'.

Chacune des valves/clapets d'admission 706, 706' permet au fluide d'accéder à la portion 115 de la chambre de filtrage située à l'intérieur du filtre principal 14. Ces deux /clapets d'admission 706, 706' sont configurés pour ne pas être ouverts simultanément. La portion 115 de la chambre de filtrage est close à l'exception des ouvertures 708, 708' contrôlées par les valves/clapets d'admission 706, 706'. Le fluide parvenant dans la portion 115 de la chambre de filtrage ne peut s'en échapper qu'en traversant le filtre principal 14 depuis sa paroi interne 15 jusqu'à sa paroi externe 16. Ainsi, le fluide traverse le filtre principal 14 toujours dans le même sens 200. Les ouvertures de sortie 114, 114' permettent au fluide ayant traversé le fluide de quitter la portion 116 de la chambre de filtrage et de sortir du dispositif de filtrage 10.

Ce dispositif de filtrage 10 et son dispositif de dérivation vont être détaillés en référence à la **figure** 5 qui illustre un mode de réalisation dans lequel le dispositif de filtrage 10 est déplacé dans le sens 5, c'est-à-dire vers le bas. Ce déplacement peut être généré par un mouvement appliqué à une perche fixé au dispositif de filtrage 10 par une virole 112' et un logement de fixation de la perche 122. De préférence, le dispositif de filtrage 10 est symétrique par rapport à un plan médian perpendiculaire à la direction du déplacement du porte-filtre 100. Sur cette figure, le dispositif de filtrage 10 est symétrique par rapport à un plan vertical passant par le milieu du porte-filtre 100.

Ainsi, dans ce mode de réalisation également, à chaque sens de progression du fluide, les clapets montés en opposition activent systématiquement l'unique étage de filtration.

Le fluide 901 situé en amont du bloc clapet 800 pénètre 902 dans une lumière 701 pratiquée dans le clapet d'échappement 702 d'un obturateur 700. Cette lumière 701 est disposée au regard d'un orifice d'entrée 806 porté par le bloc clapet 800 et donnant accès à un conduit d'entrée 801 qui forme à son extrémité une ouverture d'entrée 708 débouchant dans la portion 115 de la chambre de filtrage. L'extrémité du conduit d'entrée 801 forme un siège pour le clapet d'admission 706 qui contrôle l'accès du fluide dans la portion 115 de la chambre de filtrage. Le fluide qui ne passe pas 903 à travers la lumière 701 ne peut pas rentrer dans le dispositif de filtrage.

Lorsque du fluide provient 904 du conduit d'entrée 801, il exerce 905 une force tendant à écarter le clapet d'admission 706 par rapport au siège 802. La force minimale pour écarter le clapet de son siège est réglée par un ressort 705 décrit ci-dessous et qui exerce sur le clapet une force opposée à celle du fluide.

Le fluide pénètre ainsi 906 dans la portion 115 de la chambre de filtrage située à l'intérieur du filtre principal 14. A l'extrémité opposée de cette portion 115 de la chambre de filtrage, les conduits 801'sont obturés par le clapet d'admission 706' qui demeure close sous l'effet du fluide 907.

Le clapet d'admission 706 est fixé à une tige 704. On notera qu'en dehors de tout mouvement dudit dispositif de filtrage 10, les clapets d'admission 706, 706' demeurent fermés car pour le clapet d'admission 706 un ressort 705 disposé entre le clapet d'échappement 702 et un écrou 703 fixé à l'autre extrémité de la tige 704 exerce une force qui tend à plaquer le clapet d'admission 706 contre son siège 802, et pour le clapet d'admission 706', la tige 704', le ressort 705' et l'écrou 703' associé au bloc clapet 800'.

Le fluide, ne peut alors s'échapper de la portion 115 de la chambre de filtrage qu'en traversant 908 le filtre dans le sens 200. Le fluide parvient alors 909 dans la portion 116 de la chambre de filtrage dont il peut s'échapper en pénétrant 910, 911 dans le conduit de sortie 805' accessible par l'ouverture de sortie 114'. Le fluide exerce 912 sur le clapet d'échappement 702' un effort tendant à écarter le clapet d'échappement 702' de son siège 808' et de l'orifice 807' de sortie du conduit 805' permettant ainsi une libre évacuation 913. En effet, le clapet d'échappement 702' ne présente pas de lumière au droit de de l'orifice 807' de sortie du conduit 805'. On notera que cet écartement du clapet d'échappement 702' contribue à plaquer le clapet d'admission 706' sur son siège 802' (lorsque le fluide n'oppose pas de force sur le clapet 706'). Les deux clapets 706' et 702' étant solidaires ou tout au moins liés entre eux, l'étanchéité du clapet 706' est renforcée puisque le fluide exerce à la fois une force sur le clapet 706' et une force sur le clapet 702' et que ces deux forces tendent à plaquer le clapet 706' sur son siège 802'.

De préférence, chaque bloc clapet 800, 800' comprend plusieurs conduits d'entrée 801, 801' et plusieurs conduits de sortie 805, 805'.

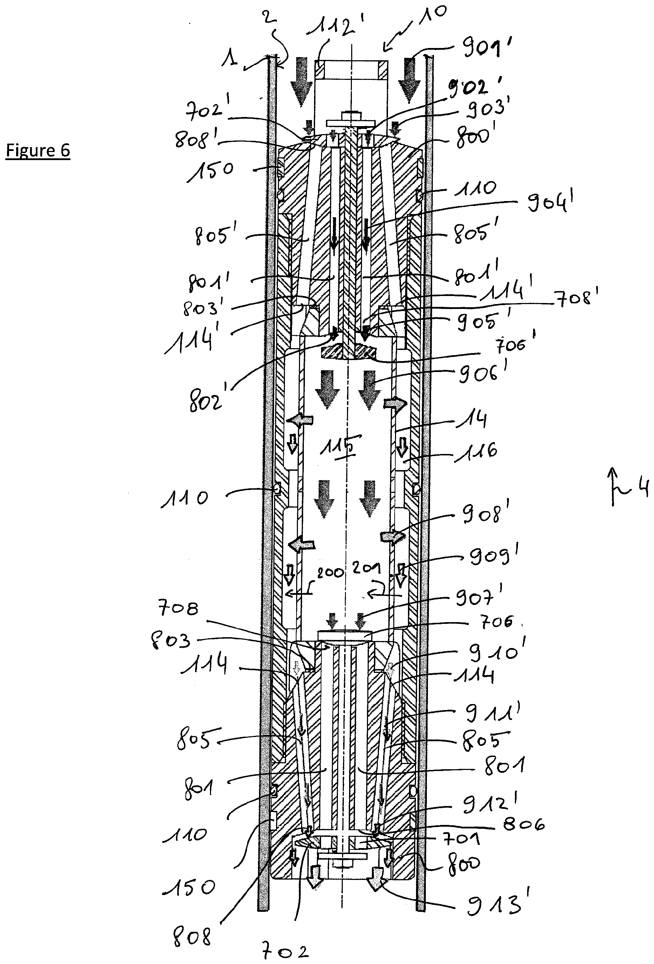

La **figure** 6 illustre le dispositif de filtrage de la figure 5, lorsque ce dernier est déplacé en sens inverse c'est-à-dire dans le sens 4 (vers le haut sur les figures 5 et 6), le fluide 901' pénètre 902', 904' dans le conduit d'entrée 801' en passant au travers des lumières 701' du clapet d'échappement 702' de la quatrième valve. Au niveau du siège 802', le fluide repousse 905' le clapet 706' vers le bas et pénètre 906' dans la portion 115 de la chambre de filtrage. Le clapet d'admission 706 demeurant fermé, le fluide traverse 908' la paroi du filtre principal 14 et parvient dans la portion 116 de la chambre de filtrage.

Si du fluide remonte par le conduit de sortie 805', il ne pourra s'en échapper car le fluide 903' en amont du clapet d'échappement 702' maintient ce dernier au contact du bloc clapet 800' et ferme ainsi les extrémités du conduit de sortie 805'.

Le fluide ne peut alors s'échapper 910', 911' que par le conduit 805 et son orifice de sortie 807 et regagne ainsi 912', 913' l'aval du dispositif de filtrage 10. Le fluide peut aussi s'échapper par les ouïes 19, 19' de vidange, de préférence comme illustré sur la figure 6, des joints d'étanchéité 110 sont disposés en amont et en aval de chaque ouïe 19, 19' de vidange. Ainsi, le fluide passant par l'ouïe 19 ou 19' pénétrant dans l'espace entre le dispositif de filtrage 10 et la paroi interne 2 du contenant 1 se retrouve confiné dans cet espace.

Ainsi, quel que soit le sens de déplacement du dispositif de filtrage 10, le fluide est filtré et le filtre principal 14 est traversé dans un unique sens 200. Les résidus ne sont alors pas relargués par un flux inverse. Par ailleurs, un seul filtre permet un filtrage dans les deux sens, ce qui facilite l'assemblage du dispositif de filtrage 10 ainsi que le stockage et la manipulation des filtres usagés.

Par ailleurs, tous les résidus sont piégés sur la face interne du filtre ce qui réduit les risques de pollution lors de sa manipulation.

On notera que l'invention s'étend néanmoins au cas où le filtre est traversé dans un unique sens opposé au sens 200.

Dans ce mode de réalisation illustré en figure 5 et 6, le dispositif de dérivation permettant de contrôler le cheminement du fluide comprend notamment les clapets d'échappement 702, 702', les clapets d'admission 706, 706', les conduits d'entrée 801, 801' et de sortie 805, 805', les ouvertures de sortie 114, 114'.

De préférence, le dispositif de filtrage 10 présente une structure simple et robuste. Sur l'exemple illustré, chaque bloc clapet 800, 800' se rapporte sur le corps 101 de forme généralement cylindrique pour former une enceinte. On peut prévoir une solidarisation par vissage comme illustré par les filetages 804, 804' portés par les blocs clapets 800, 800' et le corps 101. Préalablement à cet assemblage, on pourra insérer le filtre principal 14 qui se présente alors sous la forme d'une cartouche filtrante. Tout comme les dispositifs de filtrage illustrés sur les figures précédentes, celui des figures 5 et 6 est intégralement démontable ce qui facilite son entretien et sa dépollution.

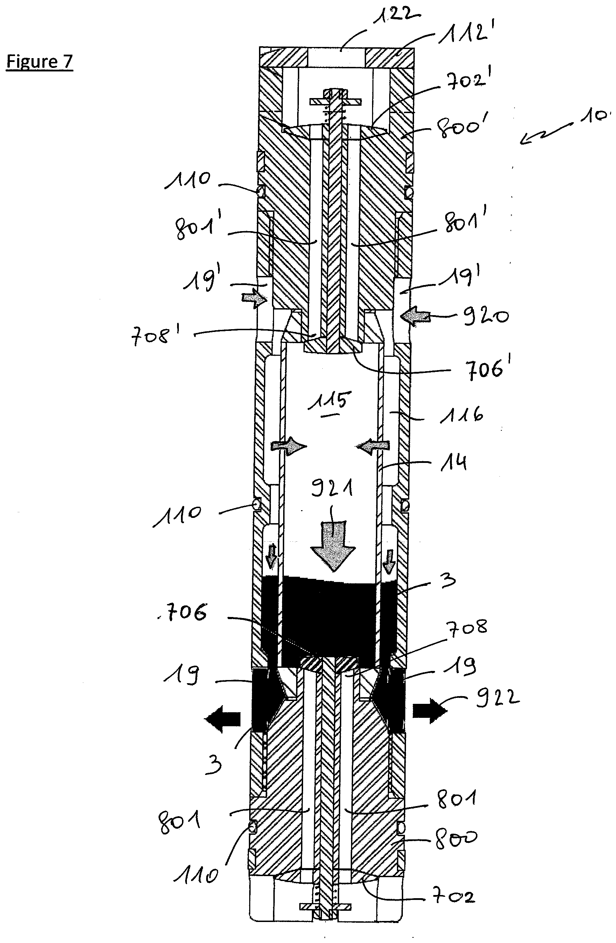

La vue en coupe de la **figure** 7 laisse apparaître les ouïes 19, 19' de vidange. Ces ouïes 19, 19' de vidange sont disposées à chaque extrémité de la portion 116 de la chambre de filtrage. Lorsque le dispositif est retiré du contenant ou est amené dans une section plus large du contenant permettant un écoulement entre les joints 110 et la paroi interne du contenant, le fluide 3 présent dans la portion 116 s'échappe par gravité des ouïes 19 de vidange, comme illustré par les flèches 920 à 922. Les ouïes 19' mettent en équipression les chambres 115 et 116 avec le milieu extérieur, facilitant l'écoulement gravitaire par les ouïes 19. Cette vidange est ainsi automatique.

De préférence, on prévoit à chaque extrémité du filtre principal 14, une portion de filtre au pouvoir filtrant plus élevé de sorte à pouvoir former deux filtres de vidange 181, 181' aptes à assurer un filtrage particulièrement fin du fluide avant son évacuation par les ouïes 19 de vidange. De manière alternative ou combinée, les éléments 181' et 181' sont des viroles d'extrémité du filtre 14.

De préférence, on prévoit également des racleurs 150 dont le fonctionnement a été décrit précédemment. On notera que les joints 110 n'ont de préférence pas de fonction de racleur et seront donc longitudinalement situés entre les racleurs. Les résidus de raclage sont ainsi filtrés. Selon un autre mode de réalisation non illustré, les joints 110 font également office de racleurs. Dans ce cas, les racleurs 150 peuvent être supprimés.

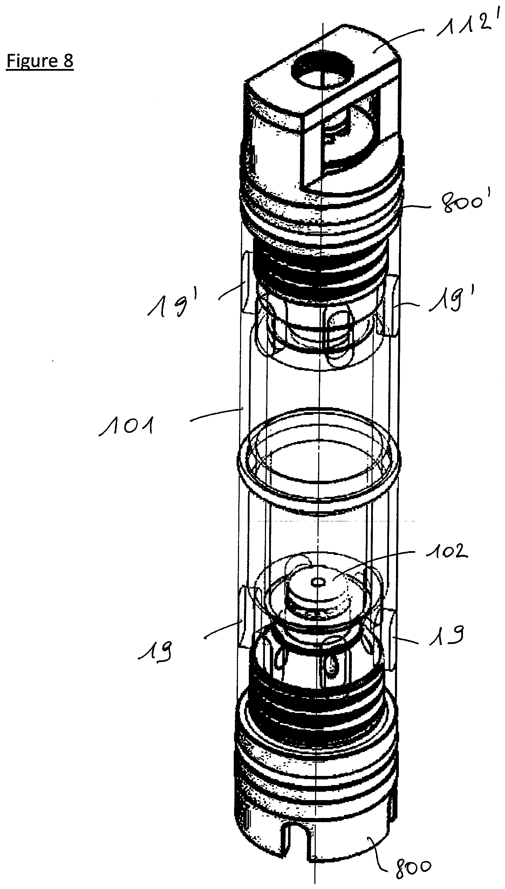

La **figure 8** illustre en perspective le dispositif de filtrage formant une cartouche filtrante. Cette figure fait clairement ressortir la simplicité de fabrication et d'assemblage du porte-filtre qui comprend principalement trois pièces : les blocs clapet 800, 800' et le corps 101.

Les caractéristiques suivantes sont communes à tous les modes de réalisation décrits précédemment. La perche 11 est activable manuellement ou mécaniquement et peut être rigide ou flexible. Dans le cas où elle est flexible, elle est radialement flexible et longitudinalement incompressible. Elle peut être enroulée autour d'un mandrin et peut être entraînée par motorisation du mandrin. La perche peut également être télescopique. Les modes de réalisation décrits précédemment prévoient un dispositif de filtrage configuré pour être déplacé en translation dans le fluide. L'invention s'étend également aux dispositifs de filtrage déplaçables en rotation.

La géométrie externe du porte-filtre est totalement modulable : elle peut être adaptée à n'importe quelle géométrie de conduite. Le diamètre minimal est fonction de la possibilité de miniaturisation du porte-filtre et du filtre.

De même, la longueur du filtre et du porte-filtre peuvent être adaptées pour chaque utilisation, en particulier par la seule longueur du corps 101. Avantageusement, ces adaptations ne nécessitent pas de modifier les blocs clapets.

De préférence, les clapets internes au porte-filtre sont à contact métal/métal, d'étanchéité relative, supportant ainsi mieux l'agressivité chimique (corrosion) des liquides filtrés que ne pourraient le faire des joints polymères. Cependant, le remplacement des portées de joints métalliques par des joints polymères est possible sans changer le principe des clapets bidirectionnels.

Selon un mode de réalisation, le porte-filtre est entièrement en métal tout comme les filtres. De cette manière, ils sont totalement compatibles avec une utilisation en métal liquide et en milieu très irradiant.

Sur les exemples illustrés, un seul filtre purifie le liquide pour chaque sens de filtration. Néanmoins, l'invention s'étend aux cas où plusieurs filtres sont disposés en série, afin par exemple d'assurer un filtrage progressif du fluide.

Par ailleurs, le filtre est adapté à la granulométrie des résidus ; elle peut avoir plusieurs épaisseurs de tamis pour éviter de colmater trop rapidement la porosité fine avec des résidus grossiers. Il suffit par exemple de disposer les épaisseurs de tamis selon leur porosité de plus en plus fine, de l'intérieur vers l'extérieur de la cartouche filtrante.

Ce porte-filtre peut être adapté au conteneur du fluide soit en modifiant les joints (dans une certaine mesure) soit en augmentant ou diminuant les sections des composants.

L'étanchéité vers la paroi interne du contenant n'est pas une exigence forte, un certain taux de fuite peut être envisagé pour favoriser la facilité de manipulation du porte-filtre à son efficacité de filtration. En effet, une forte étanchéité porte-filtre/conteneur amènera en un seul passage à filtrer l'intégralité du fluide, au risque de colmater prématurément, alors qu'un léger débit de fuite peut garantir le retrait du porte-filtre, quel que soit son taux de bouchage. Il sera alors nécessaire de procéder à plusieurs mouvements d'aller-retour pour réduire progressivement la densité de pollution du filtrat.

Au vu de ce qui précède, il apparaît clairement qu'un dispositif selon l'invention offre de nombreux avantages.

En particulier, par rapport aux solutions connues de filtrage, il se distingue par sa très grande facilité de mise en oeuvre, sa compacité, son très faible coût de réalisation et d'exploitation. Il est facile à démonter, notamment pour le remplacement des cartouches filtrantes. Il est en outre particulièrement fiable. Sa fiabilité provient notamment du fait qu'il permet de se passer de tout composant électronique ou électrique. Par ailleurs, en dehors des valves et clapets, aucun mécanisme avec des pièces articulées n'est nécessaire.

Par ailleurs, il permet de se passer de tout circuit externe à l'équipement filtré puisque ce filtre opère in situ. En effet, la plupart des moyens de purification reposent sur un transfert du fluide et son passage forcé dans le média filtrant, via une pompe et un circuit ad-hoc. A contrario, ce porte-filtre est amené dans le liquide à filtrer qui peut rester ainsi statique, ce qui, dans le cas de fluides dangereux, réduit considérablement le risque et les coûts associés à la mise en oeuvre d'une boucle dédiée à la filtration.

En outre, il peut être adapté à des dimensions de canalisations très variables, dans des endroits inaccessibles et surtout pour des liquides ne pouvant pas être sortis aisément de leur contenant. Ce porte-filtre invasif est donc spécialement adapté aux fluides ne pouvant pas être déplacés.

Le système peut être manuel, ce qui garantit à la fois une grande simplicité de mise en oeuvre et une indication du colmatage du filtre par perte de charge excessive et difficulté à manipuler (va-et-vient) le porte-filtre. Cette augmentation de la perte de charge peut également être identifiée par des capteurs externes au contenant et associés à un actionnement mécanique du porte-filtre.

Son efficacité bidirectionnelle ainsi que la rétention à l'intérieur de la cartouche filtrante sont particulièrement avantageuses pour des utilisations en milieu dangereux.

Par exemple, le dispositif de filtrage selon l'invention est particulièrement avantageux pour une utilisation en milieu nucléaire, notamment pour extraire à froid les précipités du NaK présents dans certains types de dispositifs d'essais des réacteurs d'irradiation (tels OSIRIS).

Néanmoins, le dispositif de filtrage selon l'invention peut recevoir de nombreuses autres utilisations telles que par exemple le retrait de particules solides dans un liquide contaminé (Na, NaK, Pb-Bi, eau...), comme des résidus de combustibles nucléaires issus de ruptures de gaines de crayons dans son caloporteur.

Ces situations peuvent se retrouver dans des circuits difficilement accessibles lors de démantèlement, dans des restes de dispositifs d'essais ayant assuré des tests de rupture de gaines ou lors d'une situation post-accidentelle nécessitant une décontamination préalable des particules solides les plus irradiantes avant retraitement des effluents (dans les puisards par exemple).

Spécialement conçu pour le milieu nucléaire, ce porte-filtre peut être étendu à des utilisations dans des fluides présentant d'autres types de dangerosité, bactériologique ou chimique en particulier.
- La purification d'un volume de liquide trop important pour son passage dans un circuit dédié ou d'un volume très difficile d'accès même par une perche. Pour cela, l'étanchéité des joints peut être abaissée, voire supprimer totalement en supprimant les joints y compris les racleurs. Dans ce cas, la fonction d'auto-vidange serait à reconsidérer. Cette utilisation concernerait alors plutôt l'introduction du porte-filtre dans un milieu « ouvert », en pratiquant un nombre significatif de va-et-vient pour extraire localement les polluants. On s'appuierait alors sur l'homogénéisation des polluants dans le milieu avec une concentration diminuant au fur et à mesure des oscillations du filtre.
- L'extraction de résidus en particulier flottant dans les grandes étendues d'eau. Pour cela, il convient d'adapter la section d'entrée du fluide et du filtre et éventuellement de raccourcir la hauteur du filtre. On peut également supprimer l'auto-vidange et prévoir une fonction de quille pour forcer le porte-filtre à conserver une position verticale. Ce type de porte-filtre, complètement passif, pourrait alors être utilisé par exemple pour la dépollution des mers de leurs microparticules (de taille millimétrique) telle la zone de l'océan Pacifique communément dénommée le « sixième continent ». Le dispositif porte-filtre serait alors parfaitement indépendant de tout contenant mais simplement immergé dans un grand volume de liquide. Il serait déplacé par les vagues ou la houle et oscillerait passivement.

L'invention n'est pas limitée aux seuls modes et exemples de réalisation décrits ci-dessus, mais s'étend à tous les modes de réalisation entrant dans la portée des revendications.

**REFERENCES**

| | | | |
|---|---|---|---|
| 1. | Contenant | 116. | Portion de chambre externe de filtrage |
| 2. | Paroi interne du contenant | | |
| 3. | Fluide | 118. | Chambre de sortie |
| 4. | 1^{er} sens de déplacement | 119. | Ouverture de fuite |
| 5. | 2^{ème} sens de déplacement | 120. | Chambre de fuite |
| | | 121. | Epaulement |
| 10. | Dispositif de filtrage | 122. | Logement fixation de perche |
| 11. | Perche | 123. | Joint filtre |
| 12. | Etage de filtration | | |
| 13. | Etage de filtration | 150. | Racleur circonférentiel |
| 14. | Filtre principal | 151. | Racleur d'extrémité |
| 15. | Paroi interne du filtre | 181. | Virole d'extrémité de filtre |
| 16. | Paroi externe du filtre | | |
| 17. | Fond du filtre | 14'. | Filtre |
| 18. | Filtre de vidange | 15'. | Paroi interne du filtre |
| 19. | Ouïe de vidange | 16'. | Paroi externe du filtre |
| | | 17'. | Fond du filtre |
| 100. | Porte-filtre | 18'. | Filtre de vidange |
| 101. | Corps | 19'. | Ouïe de vidange |
| 102. | Premier clapet d'échappement | | |
| 103. | Bloc clapet | 102'. | Seconde valve d'échappement |
| 104. | Ressort | 1021'. | Bille |
| 105. | Ouverture de sortie | 1022'. | Siège |
| 106. | Premier clapet d'admission | 103'. | Bloc clapet |
| 107. | Bloc clapet | 104'. | Ressort |
| 108. | Ouverture d'entrée chambre | | |
| 109. | Ressort | 106'. | Seconde valve d'admission |
| 110. | Joint d'étanchéité | 107'. | Bloc clapet |
| 111. | Chemise | 108'. | Ouverture d'entrée chambre |
| 112. | Virole | 109'. | Ressort |
| 113. | Orifice | | |
| 114. | Ouverture de sortie | 111'. | Chemise' |
| 115. | Portion de chambre interne de filtrage | 112'. | Virole |
| | | 113'. | Orifice |
| 114'. | Ouverture de sortie | | |
| 115'. | Portion de chambre de filtrage | 800. | Bloc clapet |
| 116'. | Portion de chambre de filtrage | 801. | Conduit d'entrée |
| | | 802. | Siège d'admission |
| 151' | racleur d'extrémité | 803. | joint filtre |
| 181. | Virole d'extrémité de filtre | 804. | Filetage |
| 191'. | Clapet de vidange | 805. | Conduit de sortie |
| | | 806. | Orifice d'entrée |
| 500'. | Chemin de fuite | 807. | Orifice de sortie |
| 200. | Sens de filtrage | 808. | Siège d'échappement |
| 201. | Sens opposé au sens de filtrage | | |
| | | 800'. | Bloc clapet |
| | | 801'. | Conduit d'entrée |
| 401-406. | Chemin de filtrage | 802'. | Siège d'admission |
| 500-503. | Chemin de fuite | 803'. | Joint filtre |
| 601-603 ; 605-606 : | Chemin de fuite | 804'. | Filetage |
| | | 805'. | Conduit de sortie |
| 700, 700' | Obturateur | 806'. | Orifice d'entrée |
| 701, 701' | Lumière | 807'. | Orifice de sortie |
| 702, 702' | Clapet (ou valve) d'échappement | | |
| | | 901-913 | Chemin de filtrage |
| 703,703' | Ecrou | 901'-913' | Chemin de filtrage |
| 704, 704' | Tige | 920-922 | Chemin de vidange |
| 705, 705' | Ressort | 1002 | Clapet |
| 706, 706' | Clapet (ou valve) d'admission | 1003 | Ressort |
| 708, 708'. | Ouvertures d'entrée | | |

## Revendications

1. Dispositif de filtrage (10) configuré pour être plongé au moins en partie dans un fluide à filtrer et comportant au moins un filtre principal (14) et un porte-filtre (100) supportant le filtre principal (14), le dispositif de filtrage (10) étant configuré pour être déplacé à l'intérieur du fluide et dans lequel;
- le porte filtre (100) comporte un corps (101) et au moins un premier et un deuxième blocs clapet (103, 107, 103', 107', 800, 800'),
**caractérisé en ce que** :
- le corps (101) et les deux blocs clapet (103, 107, 103', 107', 800, 800') définissent une chambre de filtrage à l'intérieur de laquelle est disposé le filtre principal (14) ;
- le filtre principal (14) présente une paroi externe (16, 16') tournée au regard du corps (101) et une paroi interne (15, 15') opposée à la paroi externe (16, 16'); le filtre principal (14) délimitant dans la chambre de filtrage, une portion interne (115) et une portion externe (116) de la chambre de filtrage situées de part et d'autre des parois interne (15) et externe (16) du filtre principal (14) ;
- le porte filtre (100) comporte au moins une ouverture d'entrée (108, 708') définie par le premier bloc clapet (107, 800') et au moins un premier clapet d'admission (106, 706') coopérant avec l'ouverture d'entrée (108, 708') et configuré pour laisser passer le fluide à travers l'ouverture d'entrée (108, 708') uniquement lorsque le dispositif de filtrage (10) est déplacé dans un premier sens de déplacement (4);
- le porte filtre (100) comporte au moins une ouverture de sortie (114) définie par le deuxième bloc clapet (103, 800') et au moins un premier clapet d'échappement (102, 702) coopérant avec l'ouverture de sortie (114) et configuré pour laisser passer le fluide à travers ouverture de sortie (114) uniquement lorsque le dispositif de filtrage (10) est déplacé dans ledit premier sens de déplacement (4) ;
- le premier clapet d'admission (106, 706') étant disposé en amont du premier clapet d'échappement (102, 702) par rapport au sens d'écoulement du fluide dans le dispositif de filtrage (10) lorsque ce dernier est déplacé dans le premier sens de déplacement (4) ;
- le passage du fluide à travers l'ouverture d'entrée (108, 708') permettant au fluide situé en amont du dispositif de filtrage (10) lorsque ce dernier est déplacé dans le premier sens de déplacement (4) de pénétrer dans la chambre de filtrage ;
- le passage du fluide à travers l'ouverture de sortie (114) permettant au fluide situé dans la chambre de filtrage de s'écouler hors de la chambre de filtrage (10) lorsque dispositif de filtrage (10) est déplacé dans le premier sens de déplacement (4) ;
- l'ouverture d'entrée (108, 708') et l'ouverture de sortie (114) étant disposées de manière à ce que lorsque le dispositif de filtrage (10) est déplacé dans ledit premier sens de déplacement (4), le fluide traverse le filtre principal (14) selon un premier sens de filtrage (200) pour passer depuis l'ouverture d'entrée (108, 708') jusqu'à l'ouverture de sortie (114) ;
- le dispositif de filtrage (10) étant configuré de manière à empêcher le fluide de traverser le filtre principal (14) selon un deuxième sens de filtrage (201) opposé au premier sens de filtrage (200) lorsque le dispositif de filtrage (10) est déplacé dans un deuxième sens de déplacement (5) opposé au premier sens de déplacement (4).

2. Dispositif de filtrage selon la revendication précédente, dans lequel l'ouverture d'entrée (108, 708') débouche dans la portion interne (115) de la chambre de filtrage et l'ouverture de sortie (114) débouche dans la portion externe (116) de la chambre de filtrage, de manière à ce que le fluide traverse obligatoirement le filtre principal (14) depuis la paroi interne (15) filtre principal (14) en jusqu'à sa paroi externe (16).

3. Dispositif de filtrage selon l'une quelconque des revendications précédentes, dans lequel le premier clapet d'admission (106, 106', 706') est configuré pour empêcher l'entrée et la sortie du fluide respectivement dans et hors de la portion interne (115) de la chambre de filtrage et à travers l'ouverture (108, 708') lorsque le dispositif de filtrage (10) est déplacé dans le deuxième sens de déplacement (5).

4. Dispositif de filtrage selon l'une quelconque des revendications précédentes, comprenant au moins un deuxième clapet d'admission (706) associé à une autre ouverture d'entrée (708) et configuré pour permettre au fluide de passer depuis l'extérieur de la chambre de filtrage jusqu'à la portion interne (115) de la chambre de filtrage via ladite autre ouverture d'entrée (708) lorsque le dispositif de filtrage (10) est déplacé dans le deuxième sens de déplacement (5) et configuré pour empêcher l'entrée et la sortie du fluide respectivement dans et hors de ladite première portion (115) via ladite autre ouverture d'entrée (708) lorsque le dispositif de filtrage (10) est déplacé dans le premier sens de déplacement (4) ;
le premier clapet d'admission (706') étant disposé en amont du deuxième clapet d'admission (706) par rapport au sens d'écoulement du fluide dans le dispositif de filtrage (10) lorsque ce dernier est déplacé dans le premier sens de déplacement (4).

5. Dispositif de filtrage selon l'une quelconque des revendications 1 à 3, configuré de manière à empêcher le fluide de traverser le filtre principal (14) lorsque le dispositif de filtrage (10) est déplacé dans le deuxième sens de déplacement (5).

6. Dispositif de filtrage selon l'une quelconque des revendications 1 à 3, dans lequel le premier clapet d'échappement (102) est disposé en aval du filtre principal (14), relativement au sens de déplacement du fluide par rapport au dispositif de filtrage (10) lorsque ce dernier est déplacé dans le premier sens de déplacement (4) et disposé amont du filtre principal (14), relativement au sens de déplacement du fluide par rapport au dispositif de filtrage (10) lorsque ce dernier est déplacé dans le deuxième sens de déplacement (5), ledit premier clapet d'échappement (102) étant configuré ::
- pour s'ouvrir sous la pression du fluide ayant traversé le filtre principal (14) lorsque le dispositif de filtrage (10) est déplacé dans le premier sens de déplacement (4) de manière à permettre au fluide ayant traversé le filtre principal (14) de quitter le dispositif de filtrage (10);
- pour se maintenir fermée autrement.

7. Dispositif de filtrage selon l'une quelconque des deux revendications précédentes dans lequel le premier clapet d'admission (106) est disposé en amont du filtre principal (14), relativement au sens de déplacement du fluide par rapport au dispositif de filtrage (10) lorsque ce dernier est déplacé dans le premier sens de déplacement (4) et disposée aval du filtre principal (14), relativement au sens de déplacement du fluide par rapport au dispositif de filtrage (10) lorsque ce dernier est déplacé dans le deuxième sens de déplacement (5), ledit premier clapet d'admission (106) étant configuré :
- pour s'ouvrir sous la pression du fluide lorsque le dispositif de filtrage (10) est déplacé dans le premier sens de déplacement (4) de manière à permettre au fluide de parvenir au filtre principal (14);
- pour se maintenir fermée autrement.

8. Dispositif de filtrage selon l'une quelconque des trois revendications précédentes, configuré de manière à former, lorsque le dispositif de filtrage (10) est déplacé dans le premier sens de déplacement (4), au moins un chemin de filtrage (401-406) passant au travers du filtre principal (14) et configuré de manière à former, lorsque le dispositif de filtrage (10) est déplacé dans le deuxième sens de déplacement (5), au moins un chemin de fuite (500-503) par lequel le fluide contourne le filtre principal (14).

9. Dispositif de filtrage selon l'une quelconque des 4 revendications précédentes, comportant deux filtre principaux (14, 14') et comportant un premier et un deuxième étages (12, 12') de filtration, chaque étage (12, 12') comprenant l'un des filtres principaux (14, 14'), le dispositif de filtrage (10) étant configuré de manière à ce que :
- lorsque le dispositif de filtrage (10) est déplacé dans le premier sens de déplacement (4), au moins une partie du fluide traverse le filtre principal (14) du premier étage (12) et ne traverse pas le filtre principal (14') du deuxième étage (13),
- lorsque le dispositif de filtrage (10) est déplacé dans le deuxième sens de déplacement (5), au moins une partie du fluide traverse le filtre principal (14') du deuxième étage (12') et ne traverse pas le filtre principal (14) du premier étage (12).

10. Dispositif de filtrage selon l'une quelconque des revendications précédentes, comportant un dispositif de vidange configuré pour permettre un écoulement du fluide sous l'effet de la gravité dès lors que le dispositif de filtrage (10) est suffisamment éloigné d'une paroi interne (2) d'un contenant (1) à l'intérieur duquel est contenu le fluide pour pouvoir s'écouler librement en périphérie du dispositif de filtrage (10).

11. Système comprenant un contenant (1) apte à contenir un fluide à filtrer (14) et un dispositif de filtrage (10) selon l'une quelconque des revendications précédentes, le dispositif de filtrage (10) étant disposé à l'intérieur du contenant (1) et étant configuré pour être déplacé manuellement ou mécaniquement à l'intérieur du contenant (1) de manière à filtrer le fluide au moins lorsqu'il est déplacé dans un premier sens (4).

12. Système selon la revendication précédente, dans lequel le contenant (1) est une conduite ou une cuve.

13. Système selon l'une quelconque des deux revendications précédentes, dans lequel le dispositif de filtrage (10) comprend, à au moins l'une de ses extrémités, au moins un racleur d'extrémité (151) formant saillie au-delà d'une enveloppe externe du dispositif de filtrage (10).

14. Procédé de dépollution d'un fluide, le procédé comprenant le déplacement d'un dispositif de filtrage (10) selon l'une quelconque des revendications 1 à 9 au sein d'un fluide dans lequel est immergé au moins en partie le dispositif de filtrage (10).

15. Procédé de dépollution selon la revendication précédente, dans lequel :
- soit le fluide est le fluide est contenu dans une conduite ou dans une cuve équipant un réacteur nucléaire ou une usine et le déplacement du dispositif de filtrage (10) est effectué de manière manuelle ou mécanique,
- soit le fluide est de l'eau contenue dans la mer ou dans un lac et le déplacement du dispositif de filtrage (10) est provoqué par de la houle.

## Patentansprüche

1. Filtervorrichtung (10), die dazu ausgelegt ist, zumindest teilweise in ein zu filterndes Fluid eingetaucht zu werden und zumindest einen Hauptfilter (14) und einen den Hauptfilter (14) tragenden Filterhalter (100) enthält, wobei die Filtervorrichtung (10) dazu ausgelegt ist, innerhalb des Fluids verlagert zu werden, wobei:
- der Filterhalter (100) einen Körper (101) und zumindest einen ersten und einen zweiten Ventilblock (103, 107, 103', 107', 800, 800') enthält,
**dadurch gekennzeichnet, dass**
- der Körper (101) und die beiden Ventilblöcke (103, 107, 103', 107', 800, 800') eine Filterkammer definieren, innerhalb welcher der Hauptfilter (14) angeordnet ist;
- der Hauptfilter (14) eine dem Körper (101) zugewandte Außenwand (16, 16') und eine der Außenwand (16, 16') entgegengesetzte Innenwand (15, 15') aufweist; wobei der Hauptfilter (14) in der Filterkammer einen Innenabschnitt (115) und einen Außenabschnitt (116) der Filterkammer begrenzt, die beiderseits der Innen- (15) und der Außenwand (16) des Hauptfilters (14) liegen;
- der Filterhalter (100) zumindest eine Einströmöffnung (108, 708') aufweist, die von dem ersten Ventilblock (107, 800') definiert wird, sowie zumindest ein erstes Einlassventil (106, 706'), das mit der Einströmöffnung (108, 708') zusammenwirkt und dazu ausgelegt ist, das Fluid nur dann durch die Einströmöffnung (108, 708') strömen zu lassen, wenn die Filtervorrichtung (10) in einer ersten Verlagerungsrichtung (4) verlagert wird;
- der Filterhalter (100) zumindest eine Ausströmöffnung (114) aufweist, die von dem zweiten Ventilblock (103, 800') definiert wird, sowie zumindest ein erstes Auslassventil (102, 702), das mit der Ausströmöffnung (114) zusammenwirkt und dazu ausgelegt ist, das Fluid nur dann durch die Ausströmöffnung (114) strömen zu lassen, wenn die Filtervorrichtung (10) in der ersten Verlagerungsrichtung (4) verlagert wird;
- wobei das erste Einlassventil (106, 706') stromaufwärts des ersten Auslassventils (102, 702) bezüglich der Strömungsrichtung des Fluids in der Filtervorrichtung (10) angeordnet ist, wenn letztere in der ersten Verlagerungsrichtung (4) verlagert wird;
- wobei der Durchtritt des Fluids durch die Einströmöffnung (107, 708') gestattet, dass das stromaufwärts der Filtervorrichtung (10) befindliche Fluid dann, wenn letztere in der ersten Verlagerungsrichtung (4) verlagert wird, in die Filterkammer eindringt;
- wobei der Durchtritt des Fluids durch die Ausströmöffnung (114) gestattet, dass das in der Filterkammer befindliche Fluid dann, wenn die Filtervorrichtung (10) in der ersten Verlagerungsrichtung (4) verlagert wird, aus der Filterkammer (10) herausströmt;
- wobei die Einströmöffnung (108, 708') und die Ausströmöffnung (114) so angeordnet sind, dass dann, wenn die Filtervorrichtung (10) in der ersten Verlagerungsrichtung (4) verlagert wird, das Fluid durch den Hauptfilter (14) in einer ersten Filterrichtung (200) strömt, um von der Einströmöffnung (108, 708') zur Ausströmöffnung (114) zu strömen;
- wobei die Filtervorrichtung (10) so ausgelegt ist, dass sie das Fluid daran hindert, in einer der ersten Filterrichtung (200) entgegengesetzten zweiten Filterrichtung (201) durch den Hauptfilter (14) zu strömen, wenn die Filtervorrichtung (10) in einer der ersten Verlagerungsrichtung (4) entgegengesetzten zweiten Verlagerungsrichtung (5) verlagert wird.

2. Filtervorrichtung nach dem vorangehenden Anspruch, wobei die Einströmöffnung (108, 708') in den Innenabschnitt (115) der Filterkammer mündet und die Ausströmöffnung (114) in den Außenabschnitt (116) der Filterkammer mündet, so dass das Fluid den Hauptfilter (14) von der Innenwand (14) des Hauptfilters (14) zu seiner Außenwand (16) zwangsweise durchströmt.

3. Filtervorrichtung nach einem der vorangehenden Ansprüche, wobei das erste Einlassventil (106, 106', 706') dazu ausgelegt ist, das Einströmen und Ausströmen des Fluids in bzw. aus dem Innenabschnitt (115) der Filterkammer und durch die Öffnung (108, 708') dann zu verhindern, wenn die Filtervorrichtung (10) in der zweiten Verlagerungsrichtung (5) verlagert wird.

4. Filtervorrichtung nach einem der vorangehenden Ansprüche, enthaltend zumindest ein zweites Einlassventil (706), das einer weiteren Einströmöffnung (708) zugeordnet und dazu ausgelegt ist, dem Fluid zu gestatten, von außerhalb der Filterkammer zum Innenabschnitt (115) der Filterkammer über die weitere Einströmöffnung (708) zu strömen, wenn die Filtervorrichtung (10) in der zweiten Verlagerungsrichtung (5) verlagert wird, und das dazu ausgelegt ist, das Einströmen und Ausströmen des Fluids in bzw. aus dem ersten Abschnitt (115) über die weitere Einströmöffnung (708) dann zu verhindern, wenn die Filtervorrichtung (10) in der ersten Verlagerungsrichtung (4) verlagert wird; wobei das erste Einlassventil (706') bezüglich der Strömungsrichtung des Fluids in der Filtervorrichtung (10) stromaufwärts des zweiten Einlassventils (706) angeordnet ist, wenn letztere in der ersten Verlagerungsrichtung (4) verlagert wird.

5. Filtervorrichtung nach einem der Ansprüche 1 bis 3, die so ausgelegt ist, dass sie das Fluid daran hindert, durch den Hauptfilter (14) zu strömen, wenn die Filtervorrichtung (10) in der zweiten Verlagerungsrichtung (5) verlagert wird.

6. Filtervorrichtung nach einem der Ansprüche 1 bis 3, wobei das erste Auslassventil (102) bezogen auf die Verlagerungsrichtung des Fluids gegenüber der Filtervorrichtung (10) stromabwärts des Hauptfilters (14) angeordnet ist, wenn letztere in der ersten Verlagerungsrichtung (4) verlagert wird, und bezogen auf die Verlagerungsrichtung des Fluids gegenüber der Filtervorrichtung (10) stromaufwärts des Hauptfilters (14) angeordnet ist, wenn letztere in der zweiten Verlagerungsrichtung (5) verlagert wird, wobei das erste Auslassventil (102) dazu ausgelegt ist,
- unter dem Druck des Fluids, das durch den Hauptfilter (14) geströmt ist, dann zu öffnen, wenn die Filtervorrichtung (10) in der ersten Verlagerungsrichtung (4) verlagert wird, so dass dem Fluid, das durch den Hauptfilter (14) geströmt ist, gestattet wird, die Filtervorrichtung (10) zu verlassen;
- sich andernfalls geschlossen zu halten.

7. Filtervorrichtung nach einem der beiden vorangehenden Ansprüche, wobei das erste Einlassventil (106) bezogen auf die Verlagerungsrichtung des Fluids gegenüber der Filtervorrichtung (10) stromaufwärts des Hauptfilters (14) angeordnet ist, wenn letztere in der ersten Verlagerungsrichtung (4) verlagert wird, und bezogen auf die Verlagerungsrichtung des Fluids gegenüber der Filtervorrichtung (10) stromabwärts des Hauptfilters (14) angeordnet ist, wenn letztere in der zweiten Verlagerungsrichtung (5) verlagert wird, wobei das erste Einlassventil (106) dazu ausgelegt ist,
- unter dem Druck des Fluids dann zu öffnen, wenn die Filtervorrichtung (10) in der ersten Verlagerungsrichtung (4) verlagert wird, so dass dem Fluid gestattet wird, in die Filtervorrichtung (10) zu gelangen;
- sich andernfalls geschlossen zu halten.

8. Filtervorrichtung nach einem der drei vorangehenden Ansprüche, wobei sie so ausgelegt ist, dass dann, wenn die Filtervorrichtung (10) in der ersten Verlagerungsrichtung (4) verlagert wird, zumindest ein Filterweg (401 - 406) gebildet wird, der durch den Hauptfilter (14) verläuft, und so ausgelegt ist, dass dann, wenn die Filtervorrichtung (10) in der zweiten Verlagerungsrichtung (5) verlagert wird, zumindest einen Umgehungsweg (401 - 406) gebildet wird, über welchen das Fluid den Hauptfilter (14) umgeht.

9. Filtervorrichtung nach einem der vier vorangehenden Ansprüche, enthaltend zwei Hauptfilter (14, 14') und eine erste und eine zweite Filterstufe (12, 12'), wobei jede Stufe (12, 12') einen der Hauptfilter (14, 14') enthält, wobei die Filtervorrichtung (10) so ausgelegt ist, dass
- dann, wenn die Filtervorrichtung (10) in der ersten Verlagerungsrichtung (4) verlagert wird, zumindest ein Teil des Fluids den Hauptfilter (14) der ersten Stufe (12) durchströmt und nicht den Hauptfilter (14') der zweiten Stufe (13) durchströmt,
- dann, wenn die Filtervorrichtung (10) in der zweiten Verlagerungsrichtung (5) verlagert wird, zumindest ein Teil des Fluids den Hauptfilter (14) der zweiten Stufe (12') durchströmt und nicht den Hauptfilter (14) der ersten Stufe (12) durchströmt.

10. Filtervorrichtung nach einem der vorangehenden Ansprüche, enthaltend eine Auflaufvorrichtung, die dazu ausgelegt ist, eine Strömung des Fluids unter der Wirkung der Schwerkraft zu gestatten, sobald die Filtervorrichtung (10) weit genug von einer Innenwand (2) eines Gefäßes (1) entfernt ist, in welchem das Fluid enthalten ist, um am Umfang der Filtervorrichtung (10) frei ablaufen zu können.

11. System mit einem Gefäß (1), das dazu geeignet ist, ein zu filterndes Fluid (14) zu enthalten, und mit einer Filtervorrichtung nach einem der vorangehenden Ansprüche, wobei die Filtervorrichtung (10) innerhalb des Gefäßes (1) angeordnet und dazu ausgelegt ist, manuell oder mechanisch innerhalb des Gefäßes (1) verlagert zu werden, so dass sie das Fluid zumindest dann filtert, wenn sie in einer ersten Richtung (4) verlagert wird.

12. System nach dem vorangehenden Anspruch, wobei das Gefäß (1) eine Leitung oder ein Behälter ist.

13. System nach einem der beiden vorangehenden Ansprüche, wobei die Filtervorrichtung (10) an zumindest einem ihrer Enden zumindest einen Endabstreifer (151) aufweist, der einen Vorsprung über einen Außenmantel der Filtervorrichtung (10) hinaus bildet.

14. Verfahren zum Reinigen eines Fluids, wobei das Verfahren das Verlagern einer Filtervorrichtung (10) nach einem der vorangehenden Ansprüche 1 bis 9 innerhalb eines Fluids umfasst, in welches die Filtervorrichtung (10) zumindest teilweise untergetaucht ist.

15. Verfahren zum Reinigen nach dem vorangehenden Anspruch, wobei
- entweder das Fluid in einer Leitung oder in einem Behälter enthalten ist, mit der/dem ein Atomreaktor oder eine Anlage ausgestattet ist, und die Verlagerung der Filtervorrichtung (10) manuell oder mechanisch erfolgt,
- oder das Fluid Wasser ist, das im Meer oder in einem See enthalten ist, und die Verlagerung der Filtervorrichtung (10) durch den Wellengang hervorgerufen wird.

## Claims

1. Filtering device (10) configured to be immersed at least partially in a fluid to be filtered and comprising at least one main filter (14) and a filter holder (100) supporting the main filter (14), the filtering device (10) being configured to be moved inside the fluid and; wherein
- the filter holder (100) comprises a body (101) and at least one first and a second valve units (103, 107, 103', 107', 800, 800'),
**characterized in that**
- the body (101) and the two valve units (103, 107, 103', 107', 800, 800') defining a filtering chamber inside of which the main filter (14) is arranged;
- the main filter (14) has an outer wall (16, 16') turned next to the body (101) and an inner wall (15, 15') opposite to the outer wall (16, 16'); the main filter (14) delimiting in the filtering chamber, an inner portion (115) and an outer portion (116) of the filtering chamber located on either side of the inner (15) and outer (16) walls of the main filter (14);
- the filter holder (100) comprises at least one inlet opening (108, 708') defined by the first valve unit (107, 800') and at least one first intake valve (106, 706') cooperating with the inlet opening (108, 708') and configured to allow the fluid to pass through the inlet opening (108, 708') only when the filtering device (10) is moved in a first movement direction (4);
- the filter holder (100) comprises at least one outlet opening (114) defined by the second valve unit (103, 800') and at least one first release valve (102, 702) cooperating with the outlet opening (114) and configured to allow the fluid to pass through the outlet opening (114) only when the filtering device (10) is moved in said first movement direction (4);
- the first intake valve (106, 706') being arranged upstream of the first release valve (102, 702) with respect to the direction of flow of the fluid in the filtering device (10) when the latter is moved in the first movement direction (4);
- the passage of the fluid through the inlet opening (108, 708') allowing the fluid located upstream from the filtering device (10) when the latter is moved in the first movement direction (4) to penetrate into the filtering chamber;
- the passage of the fluid through the outlet opening (114) allowing the fluid located in the filtering chamber to flow outside of the filtering chamber (10) when the filtering device (10) is moved in the first movement direction (4);
- the inlet opening (108, 708') and the outlet opening (114) being arranged in such a way that when the filtering device (10) is moved in said first movement direction (4), the fluid passes through the main filter (14) in a first filtering direction (200) to pass from the inlet opening (108, 708') to the outlet opening (114);
- the filtering device (10) being configured in such a way as to prevent the fluid from passing through the main filter (14) in a second filtering direction (201) opposite to the first filtering direction (200) when the filtering device (10) is moved in a second movement direction (5) opposite to the first movement direction (4).

2. Filtering device according to the preceding claim, wherein the inlet opening (108, 708') opens into the inner portion (115) of the filtering chamber and the outlet opening (114) opens into the outer portion (116) of the filtering chamber, in such a way that the fluid must pass through the main filter (14) from the inner wall (15) of the main filter (14) to its outer wall (16).

3. Filtering device according to any preceding claim, wherein the first intake valve (106, 106', 706') is configured to prevent the entering and the exiting of the fluid respectively in and out of the inner portion (115) of the filtering chamber and through the opening (108, 708') when the filtering device (10) is moved in the second movement direction (5).

4. Filtering device according to any preceding claim, comprising at least one second intake valve (706) associated with another inlet opening (708) and configured to allow the fluid to pass from the outside of the filtering chamber to the inner portion (115) of the filtering chamber via said other inlet opening (708) when the filtering device (10) is moved in the second movement direction (5) and configured to prevent the entering and the exiting of the fluid respectively in and out of said first portion (115) via said other inlet opening (708) when the filtering device (10) is moved in the first movement direction (4);
the first intake valve (706') being arranged upstream of the second intake valve (706) with respect to the direction of flow of the fluid in the filtering device (10) when the latter is moved in the first movement direction (4).

5. Filtering device according to any of claims 1 to 3, configured in such a way as to prevent the fluid from passing through the main filter (14) when the filtering device (10) is moved in the second movement direction (5).

6. Filtering device according to any of claims 1 to 3, wherein the first release valve (102) is arranged downstream of the main filter (14), relatively to the movement direction of the fluid with respect to the filtering device (10) when the latter is moved in the first movement direction (4) and arranged upstream of the main filter (14), relatively to the movement direction of the fluid with respect to the filtering device (10) when the latter is moved in the second movement direction (5), with said first release valve (102) being configured:
- to open under the pressure of the fluid that has passed through the main filter (14) when the filtering device (10) is moved in the first movement direction (4) in such a way as to allow the fluid having passed through the main filter (14) to exit the filtering device (10);
- to maintain itself closed otherwise.

7. Filtering device according to any one of the two preceding claims wherein the first intake valve (106) is arranged upstream of the main filter (14), relatively to the movement direction of the fluid with respect to the filtering device (10) when the latter is moved in the first movement direction (4) and arranged downstream of the main filter (14), relatively to the movement direction of the fluid with respect to the filtering device (10) when the latter is moved in the second movement direction (5), said first intake valve (106) being configured:
- to open under the pressure of the fluid when the filtering device (10) is moved in the first movement direction (4) in such a way as to allow the fluid to arrive in the main filter (14);
- to maintain itself closed otherwise.

8. Filtering device according to any one of the three preceding claims, configured in such a way as to form, when the filtering device (10) is moved in the first movement direction (4), at least one filtering path (401-406) passing through the main filter (14) and configured in such a way as to form, when the filtering device (10) is moved in the second movement direction (5), at least one leakage path (500-503) through which the fluid bypasses the main filter (14).

9. Filtering device according to any one of the four preceding claims, comprising two main filters (14, 14') and comprising a first and a second filtration stages (12, 12'), with each stage (12, 12') comprising one of main filters (14, 14'), the filtering device (10) being configured in such a way that:
- when the filtering device (10) is moved in the first movement direction (4), at least one part of the fluid passes through the main filter (14) of the first stage (12) and does not pass through the main filter (14') of the second stage (13),
- when the filtering device (10) is moved in the second movement direction (5), at least one part of the fluid passes through the main filter (14') of the second stage (12') and does not pass through the main filter (14) of the first stage (12).

10. Filtering device according to any preceding claim, comprising a flushing device configured to allow a flow of the fluid under the effect of gravity when the filtering device (10) is sufficiently separated from an inner wall (2) of a container (1) inside of which is contained the fluid in order to be able to flow freely at the periphery of the filtering device (10).

11. System comprising a container (1) able to contain a fluid to be filtered (14) and a filtering device (10) according to any preceding claim, the filtering device (10) being arranged inside the container (1) and being configured to be moved manually or mechanically inside the container (1) in such a way as to filter the fluid at least when it is moved in a first direction (4).

12. System according to the preceding claim, wherein the container (1) is a duct or a tank.

13. System according to any of the two preceding claims, wherein the filtering device (10) comprises, at at least one of its ends, at least one end scraper (151) protruding beyond an outer casing of the filtering device (10).

14. Method for depolluting a fluid, with the method comprising the movement of a filtering device (10) according to any of claims 1 to 9 inside a fluid wherein the filtering device (10) is immersed at least partially.

15. Method for depolluting according to the preceding claim, wherein
- whether the fluid is contained in a duct or in a tank provided in a nuclear reactor or factory and wherein the movement of the filtering device (10) is carried out manually or mechanically.
- Or the fluid is the water contained in the sea or in a lake and wherein the movement of the filtering device (10) is provoked by swells.
